# EUROPEAN PATENT SPECIFICATION

(11) **EP 4 281 200 B1**
(45) Date of publication and mention of the grant of the patent: **17.12.2025**
(21) Application number: 22702772.9
(22) Date of filing: 25.01.2022
(51) Int. Cl.: A63F 13/218, A63F 13/24, A63F 13/98, G06F 3/044

(54) **PERIPHERAL INPUT DEVICE MODULE**
PERIPHERIEEINGABEVORRICHTUNGSMODUL
MODULE DE DISPOSITIF D'ENTRÉE PÉRIPHÉRIQUE

(30) Priority: 25.01.2021 GB 202101000
(43) Date of publication of application: 29.11.2023
(73) Proprietor: Tangi0 Limited, London SW15 2SR (GB)
(72) Inventor: KONG, Ming, London SW11 3TP (GB); RODRIGUEZ JAVALOYES, Jose, 03203 Alicante (ES); NIKKHOU SARIGHIEH, Hamidreza, Harlow CM18 7FU (GB); COWLING, Olivia Alice Sarah, London N17 9EA (GB); MCPHAIL, Alasdair Simon, London N4 1DH (GB); ROWLEY, William David, London N11 2QS (GB); DING, Zhe, London E14 9QT (GB); GUO, Liucheng, London SW13 0AN (GB)
(74) Representative: Barker Brettell LLP
(86) International application number: PCT/GB2022/050190
(87) International publication number: WO 2022/157517

(56) References cited:
- EP-A1- 3 305 381
- EP-A1- 3 305 381
- EP-A2- 3 640 771
- US-A1- 2016 149 426
- US-A1- 2016 149 426
- US-A1- 2019 346 974
- US-A1- 2019 346 974

## Description

### Technical Field

This invention relates generally to a peripheral input device module that is connectable to a main control device to form a coherent modular control device and provide one or more electrical signals to the main control device in response to a user interaction with the input device module.

### Background to the Invention

A peripheral input device is an auxiliary device used to provide signals or to transfer data or command functions to a computing device, usually for controlling the computing device. Well known examples include computer peripherals such as a keyboard and mouse, consumer products such as handheld television controllers, and gaming controllers. These peripheral input devices are most commonly in wired or wireless communication with the computing device and provide user functionality to the computing device.

More recently, there is increasing interest in modular control devices that are capable of changing its input configuration to provide a user customisable control interface. Modular control devices comprise a main control device and one or more physically separate control components or peripherals that attach to the main device to form a coherent single physical object or modular control device. Each control component can provide a different user input functionality to the main device to change how the user interacts with the resulting control device.

For example, US 8241126B2 discloses a video game controller with swappable modular control input components such as joysticks, trackballs and directional pads. Each input component is connectable to a main controller and provides input data to the main controller based on a user interaction with the input component. In this case, the input components are peripheral devices for the main controller, which is itself a peripheral device to a remote computing device (the game console). Each input component comprises specific control input hardware such as capacitive and/or electromechanical sensors, a microprocessor and sensor circuitry for converting user actions into data that is read by the main controller hardware, and an electrical interface or connector for connecting to an input port of the main controller. As the type of data depends on the type of input component (e.g. joystick, directional pad etc.) control input hardware is also configured to store and provide information indicating which type of input component it is.

Other applications of modular control devices include, but are not limited to, automotive interiors (e.g. steering wheel, centre console, dashboard, and/or door handle control inputs), where it is desirable to provide customisable control interfaces that can be replaced based on the specific needs of the user e.g. accounting for user preferences, use cases and/or physical impairments.

Although known modular control devices provide generally for swappable peripheral input devices, these peripheral input devices generally require integration of a number of various electronic components in both the main and peripheral devices for measuring and processing data as well as means for storing data on the peripheral for identifying the peripheral device. US 10188939B2 is another example of a modular control device with a main and peripheral elements, where each peripheral module comprises electronic components including a storage element which stores a module identifier that is collected by the main device.

These peripheral input devices are also limited in their form and function by conventional design restrictions associated with accommodating traditional capacitive sensors, buttons and joysticks. These standard input components generally require electronic circuitry and rely on the presence of a printed circuit board, and a large number of metal wires, traces and electrodes in the peripheral device to provide even relatively simple user input functionality, whereby the number and size of such components typically scales with the device size.

As such, the design freedom of known peripherals is limited and their electronic circuitry often complex. In addition, their manufacture and assembly is both costly and difficult. It is therefore desirable to develop peripheral devices that are simpler and less costly to manufacture and assemble without sacrificing user functionality, and offer greater design freedom in form and function.

Aspects and embodiments of the present invention have been devised with the foregoing in mind.

US2019346974 A1 describes a sensor device having a plurality of electrode portions configured to provide one or more electrical signals and a non-conductive material provided on or over the plurality of electrode portions. The one or more electrical signals are provided in response to a change in capacitance between (i) at least one of the plurality of electrode portions and a conductive object being near to or in contact with the non-conductive material, and/or (ii) at least one of the plurality of electrode portions and at least one other of the plurality of electrode portions.

EP3305381 A1 describes an attachment attachable to a game controller, including a controller-side slide portion on which a controller-side operation button is provided. The attachment includes an attachment-side slide portion and an attachment-side operation button. The attachment-side slide portion is provided on a first surface of the attachment, wherein the attachment-side slide portion is configured to slidably engage with the controller-side slide portion in a predetermined slide direction, and wherein the controller-side slide portion is insertable into the attachment-side slide portion from a first side in the slide direction. The attachment-side operation button is capable of protruding from a second surface on a reverse side from the first surface. The attachment-side operation button includes a actuation portion capable of protruding from the first surface, thereby pressing the controller-side operation button, in response to an operation of pressing the attachment-side operation button.

US2016149426 A1 describes a charging device for one or more input modules for a touch-screen device. The charging device comprises a charging mechanism and portions which are shaped to receive an input module. The charging mechanism comprises a power input and a power output. The power input is configured to receive power from an external power source and the power input is configured to provide power to one or more input modules which are attached to the charging device.

### Summary of the Invention

The invention is defined by the appended claims.

### Brief Description of Drawings

In order that the invention can be well understood, embodiments will now be discussed by way of example only with reference to the accompanying drawings, in which:
**Figure 1** shows a schematic diagram of a modular control system according to an embodiment of the invention;
**Figures 2(a) and 2(b)** show generic touch sensing electrode configurations in a peripheral input device module;
**Figure 2(c)** shows electrical signals associated with the configuration of figure 2(b);
**Figure 2(d)** shows a generic pressure sensing electrode configuration in a peripheral input device module;
**Figures 3(a) to 3(c)** show the operation of another sensing electrode configuration for touch and pressure sensing;
**Figure 3(d)** shows an electrical signal associated with the interactions shown in figures 3(a) to 3(c);
**Figure 4** illustrates a first example peripheral input device module according to an embodiment;
**Figure 5** shows an exploded view of the peripheral input device module of figure 4;
**Figure 6** shows a cross-section of the peripheral input device module of figure 4 connected to a main control device;
**Figure 7** shows the peripheral input device module of figure 4 in a partially assembled state;
**Figures 8(a) to 8(c)** illustrate steps of connecting the peripheral input device module to a main control device;
**Figures 9(a) and 9(b)** show examples of shorting different sensing electrodes of the peripheral input device module to ground for device identification;
**Figures 9(c) and 9(d)** illustrate the corresponding electrical signals measured by the main control device for the sensing electrode configurations of figures 8(a) and 8(b) respectively;
**Figures 10(a) to 10(c)** illustrate the electrical signals measured by the main control device when the peripheral input device modules is disconnected, connected and disconnected again, respectively, for device detection;
**Figure 11(a)** illustrates a second example of a peripheral input device module according to an embodiment;
**Figure 11(b)** shows an exploded view of the peripheral input device module of figure 11(a);
**Figure 12(a)** illustrates a third example of a peripheral input device module according to an embodiment;
**Figure 12(b)** shows an exploded view of the peripheral input device module of figure 12(a);
**Figure 13(a)** illustrates a fourth example of a peripheral input device module according to an embodiment;
**Figure 13(b)** shows an exploded view of the peripheral input device module of figure 13(a);
**Figures 14(a) to 14(c)** show schematic cross-sections of a joystick sensing element according to an embodiment;
**Figures 15(a) to 15(c)** show how the joysticks of figures 14(a)-14(c) operate;
**Figures 16(a) to 16(c)** show how a tilt direction of the joysticks of figures 14(a)-14(c) is determined from the measured electrical signals;
**Figures 17(a) to 17(c)** show cross-sections of a joystick sensing element according to another embodiment in different positions;
**Figures 18(a) to 18(c)** show how a lateral translation direction of the joystick of figures 17(a)-17(c) is determined from the measured electrical signals;
**Figures 19(a) to 19(c)** show schematic cross-sections of example slide rail-type connector configurations for a peripheral input device module;
**Figures 20(a) and 20(b)** show schematic cross-sections of example plug and socket-type connector configurations for a peripheral input device module;
**Figures 21(a) to 21(e)** show example ways of electrically connecting a conductive plastic electrical contact portion of the peripheral input device to a metal electrical contact; and
**Figures 22(a) to 22(d)** show example ways of electrically connecting a conductive plastic electrical contact portion of the peripheral input device to another conductive plastic electrical contact; and
**Figure 23** shows a method of manufacturing the peripheral device.

It should be noted that the figures are diagrammatic and may not be drawn to scale. Relative dimensions and proportions of parts of these figures may have been shown exaggerated or reduced in size, for the sake of clarity and convenience in the drawings. The same reference signs are generally used to refer to corresponding or similar features in modified and/or different embodiments.

### Detailed Description

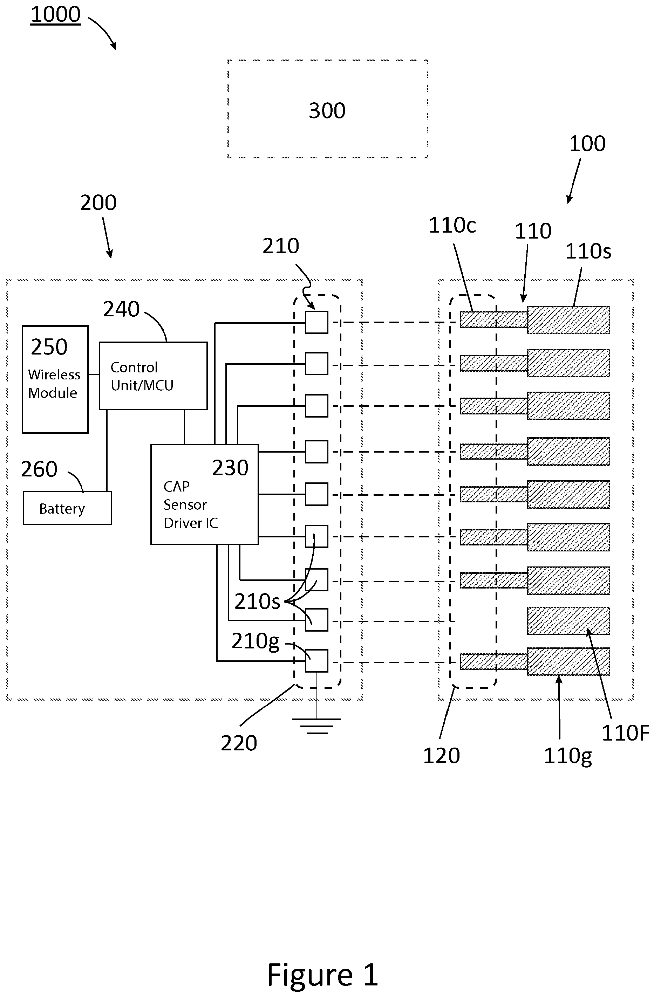

Figure 1 shows a schematic diagram of a modular control system 1000 according to an embodiment of the invention. The system 1000 comprises a main control device 200 and a peripheral input device module 100 (referred to hereafter as a main device and peripheral device, respectively, for brevity). The peripheral device 200 and the peripheral device 100 are physically separate devices or device modules that are connectable or attachable to one another to form a single coherent modular control device. The peripheral device 100 is configured to provide one or more electrical signals to the main device 200 in response to a user interaction with the peripheral device 100. When connected, the main device 200 measures the electrical signals produced by the peripheral device 100 and can process them to determine or interpret the user interaction with the peripheral device 100 and generate one or more control signals based on the determined user interaction. The control signals may be used for controlling one or more processes, operations or functions of the main device 200 or of a remote computing device 300 in wired or wireless communication with the main device 200. Alternatively, depending on the application, the main device 200 may be considered to send measurement data to the remote device 300 for processing.

In general, the main device 200 may take different shapes/forms, serve different functions and comprise conventional electronic components. For example, the main device 200 may be a standalone computing device with or without its own user input functionalities, or it may itself be a peripheral input device with its own user input functionalities for controlling the remote computing device 300. The main device 200 may be a substantially portable and/or hand held device, e.g. the main device 200 may be a portable or mobile computing device (e.g. a laptop, tablet, or smart phone), a wired or wireless controller (e.g. a gaming and/or virtual reality controller), or a computer peripheral. Alternatively, the main device 200 may be substantially non-portable, such as a control console (e.g. part of an automotive interior control console, such as a customisable control interface for a steering wheel).

The peripheral device 100 extends the functionality of the main device 200 to include a set of specific functions provided by the peripheral device 100. In practice, the system 1000 may comprise one or more peripheral devices 100 that are interchangeably connectable to the main device 200. Each peripheral device 100 can be configured with a different three-dimensional (3D) shape/form and function based on the application to allow the size, shape, appearance, and functionality of modular control device to change.

The peripheral device 100 is a capacitive sensing device configured to provide various touch and/or pressure/force-based sensing functions. Touch and/or pressure-based user interactions with the peripheral device 100 cause a change in the one or more electrical signals that is measurable by the main device 200.

Unlike known peripheral input devices, the peripheral device 100 is electrically passive (i.e. requires no on-board power source to operate) and does not contain any conventional metal-based electronic circuit components, such as metal electrodes, wires or traces, resistors, transistors, capacitors, inductors, diodes, integrated circuits, processors, storage devices, or batteries. Instead, the peripheral device 100 can be made exclusively from thermo-formable conductive and non-conductive materials, such as plastic and rubber materials that can be formed by one or more moulding processes into almost any 3D shape and size and can be substantially rigid, flexible, and/or pliable/deformable. This allows a wide range of capacitive sensing functionalities to be achieved through suitable design of the thermo-formable conductive sensing electrodes and non-conductive elements of the peripheral device 100, as described in more detail below.

The peripheral device 100 comprises a plurality of sensing electrodes 110 configured to provide electrical signals to the main device 200 in response to a touch and/or pressure-based user interactions with the peripheral device 100. The sensing electrodes 210 are formed of or comprise a thermo-formable non-metallic conductive material that can be formed by one or more moulding processes such as injection moulding or compression moulding. The sensing electrodes 110 may be substantially rigid, pliable and/or deformable, and need not all have the same material properties (i.e. mechanical and electrical properties). Suitable materials for the sensing electrodes include but are not limited to conductive plastics, such as conductive thermoplastic polyurethane (TPU), conductive thermoplastic elastomer (TPE), conductive acrylonitrile butadiene styrene (ABS), conductive silicones, conductive polyurethane (PU), and conductive ethylene vinyl acetate (EVA). Throughout the accompanying figures, the sensing electrodes 110 appear as shaded elements for clarity.

Each sensing electrode 110 comprises at least one sensing portion 110s configured to capacitively interact with a conductive object 400 such as a user's finger and/or another sensing portion 110s on the same or a different sensing electrode 110. As such, the one or more electrical signals are provided in response to (i) a change in capacitance between a sensing portion 110s of the respective sensing electrode 110 and a conductive object 400 being near to or in contact with the respective sensing portion 110s, and/or (ii) a change in capacitance between a sensing portion 110s of the respective sensing electrode 110 and a sensing portion 110s of another sensing electrode 110 or another sensing portion 110s of the (same) respective sensing electrode 110.

At least some of the sensing electrodes 110 comprise one or more at least partially exposed connector portions 110c that form an electrical connector 120 for electrically connecting the peripheral device 100 to the main device 200. Each connector portion 110c is configured to electrically connect directly to respective electrical contact 210 of the capacitive sensing circuit 230 of the main device 200 (as described in more detail below).

Sensing electrodes 110 that do not comprise a connector portion 110c, e.g. sensing electrode 110F in figure 1, are configured to electrically contact a sensing electrode 110 which does have a connector portion 110c in order to connect to the sensing circuit 230 of the main device 200. The electrical contact between such electrodes 110 is mechanical, i.e. made through direct physical contact between respective sensing electrodes 110F, 110g. In practice, this can be achieved through simple abutment, or a (non-metallic) fastener can be used and secure the respective sensing electrodes 110F, 110g together and maintain contact (not shown).

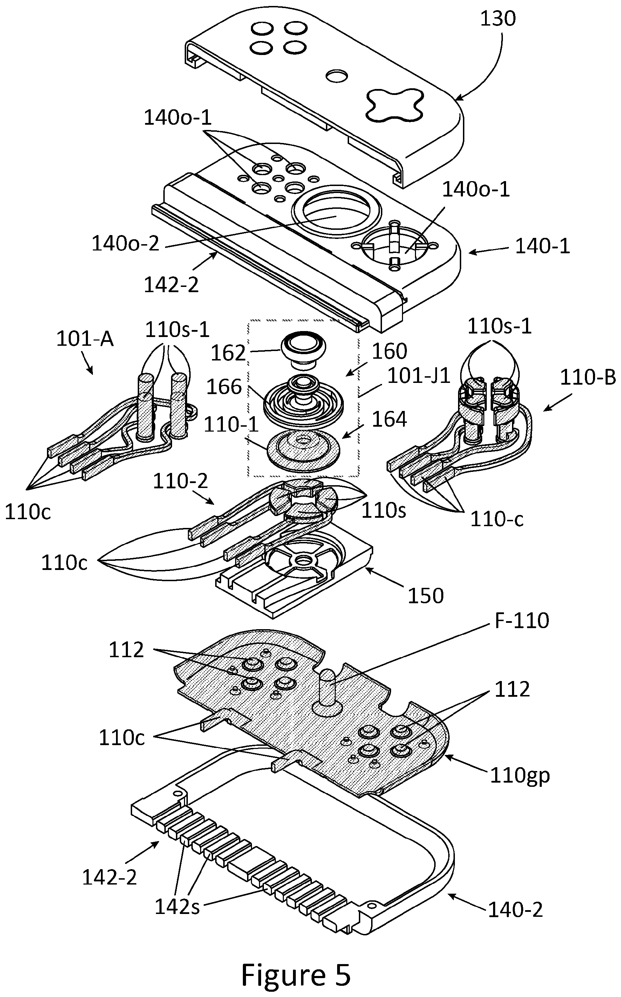

At least one sensing electrode 110 with a connector portion 110c is configured to connect to a ground electrode 210g of the main device 200 to be a ground electrode 110g. Preferably, at least one ground electrode 110g is configured as a ground plane 110gp for the peripheral device 100, with an extended area that overlaps other sensing electrodes 110 (e.g. see figure 5). The ground plane 210gp serves to shield the other sensing electrodes 110 from the external environment and thereby reduces noise and interference in the electrical signals. The ground electrode 110g or ground plane 110gp may also have one or more sensing portions 110s that capacitively interact with sensing portions 110s on other sensing electrodes 110 and thus also play an active role in the sensing functionalities, as described below.

Optionally, a sensing electrode 110F that does not comprise a connector portion 110c can conveniently be configured as a ground electrode through contact with the ground electrode 210g, as shown.

The peripheral device 100 also comprises various non-conductive elements that are used to support and retain the sensing electrodes 110, be provided on/over the sensing portions 110s as a cover or interface layer, and/or be provided between sensing portions 110s, as will be described in more detail below. The non-conductive elements of the peripheral device 100 are formed of or comprise one or more thermo-formable non-conductive materials that can similarly be formed by one or more moulding processes such as injection moulding, compression moulding, over-moulding and/or heat press. For example, non-conductive material may be over-moulded onto one or more of the sensing electrodes 110 or vice versa. The non-conductive material may be substantially rigid, or flexible, pliable and/or deformable. Suitable materials for the non-conductive elements include but are not limited to non-conductive TPU, non-conductive TPE, non-conductive ABS, non-conductive silicones, and fabrics.

With reference to figure 1, the main device 200 comprises a capacitive sensing circuit 230 for measuring the electrical signals provided by the connected peripheral device 100. The capacitive sensing circuit 230 comprises a capacitive sensing chip and an array of electrical contacts 210 for connecting the sensing electrodes 110 of the peripheral device 100 to the capacitive sensing chip. The array of electrical contacts 210 form part of an electrical connector 220 for connecting with the electrical connector 120 of the peripheral device 100. Each electrical contact 210 is configured to electrically connect to the respective connector portions 110c of the sensing electrodes 110, as will be described in more detail below.

The array of electrical contacts 210 comprise a plurality of sense contacts 210s connected to sensing channels of the capacitive sensing chip and at least one ground contact 210g connected to a ground pin of the capacitive sense chip. The capacitive sensing chip can measure changes in self-capacitance at a sensing contact 210s for the touch sensing functions, and/or changes in capacitance between a pair of sense contacts 210s or between a sense contact 210s and a ground contact 210g for the mechanical pressure sensing functions. The capacitance measurement may be a time or frequency-based measurement, as is known in the art.

The main device 200 also comprises a control unit or microcontroller 240 in data communication with the capacitive sensing chip, and a power management unit 260 for powering the main device 200. The control unit 240 is configured to receive measurement data from the capacitive sensing circuit 230. The power management unit 260 may be connectable to a battery, or the power management unit may comprise a re-chargeable battery.

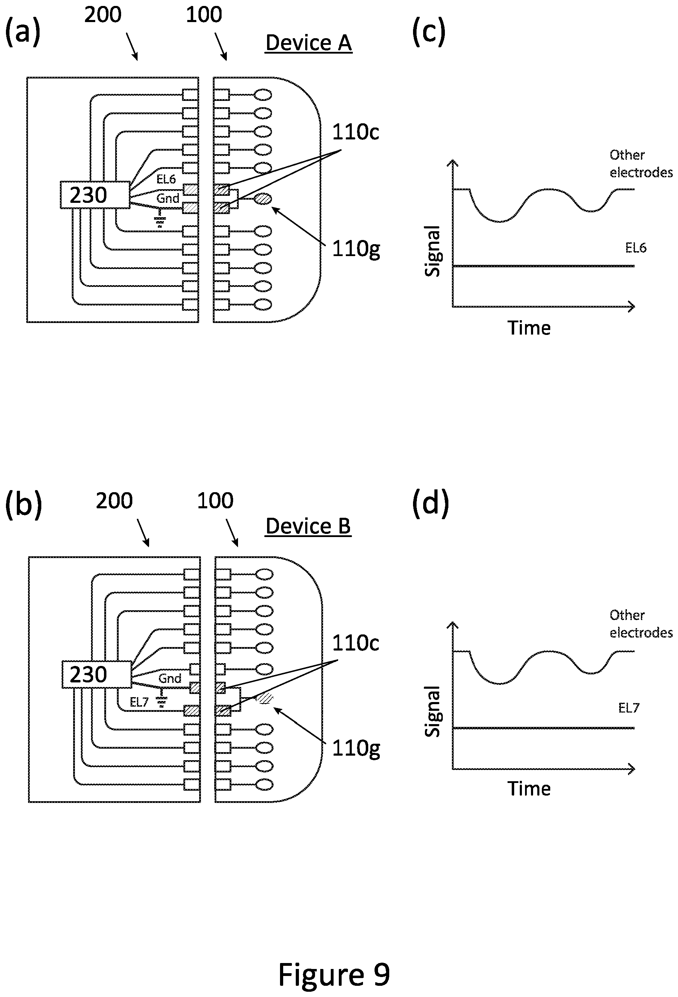

The measurement data gathered from the capacitive sensing chip is processed or analysed to determine one or more user interactions with the connected peripheral device 100. Processing of the measurement data can be performed on-board the main device 200 by the control unit 240 or at the remote computing device 300, where present. Where processing is performed on the main device 200, the control unit 240 comprises a processor and a memory (not shown) for storing one or more software programs or program instructions, that when executed or run on the processor causes the control unit 240 to process and/or analyse the measurement data to determine a user interaction with the peripheral device 100 based on the measurement data. For example, the control unit 240 may be configured to determine or detect one or more of: a contact or touch from a user/operator, a contact/touch position, a speed, direction and/or amount of movement of said touch for a touch sensing functions; and/or a movement/deformation, direction of movement/deformation, and/or amount of movement/deformation of a sensing portion 110s relative to another sensing portion 210s of the same or different sensing electrode 210 for a mechanical pressure sensing functions. The control unit 240 is also configured to detect when a peripheral device 100 is attached and identify the specific connected peripheral device 100 based on the measured electrical signals (described in more detail below with reference to figures 9(a) to 10(c)). The identity of the connected peripheral device 100 is used (e.g. by the software program) to interpret the measurement data and determine the user interaction. Processing and/or analysing the measurement data may comprise filtering, smoothing, differentiating, peak finding and/or comparing data to one or more predefined thresholds or functions. The control unit 240 may then be configured to generate one or more control/command signals based on the determined user interaction(s) for controlling one or more functions/operations of the main device 200 or remote computing device 300 (where present in the system 1000).

The main device 200 may also include a wireless communication unit 250 in data communication with the control unit 240 for communicating with a remote computing device 300 over a wireless network (e.g. Bluetooth, Bluetooth low energy, or WiFi). For example, the wireless communication unit 250 can be used to send any control signals or other data generated/determined by the control unit 240 to the remote computing device 300, and/or to send measurement data collected from the capacitive sensing chip to the remote computing device 300 for processing as described above.

It will be appreciated that the main device 200 may also comprise various other hardware components not shown, depending on the purpose and function of the main device 200. For example, the main device 200 may further comprise a vibration motor for providing tactile or haptic feed to the user, a haptic driver for the vibration motor, and an inertial measurement unit (IMU) for detecting motion or movement of the main device 200. The IMU may comprise an accelerometer, gyroscope and/or a magnetometer (e.g. the IMU may have 3, 6 or 9 degrees of freedom), as is known in the art.

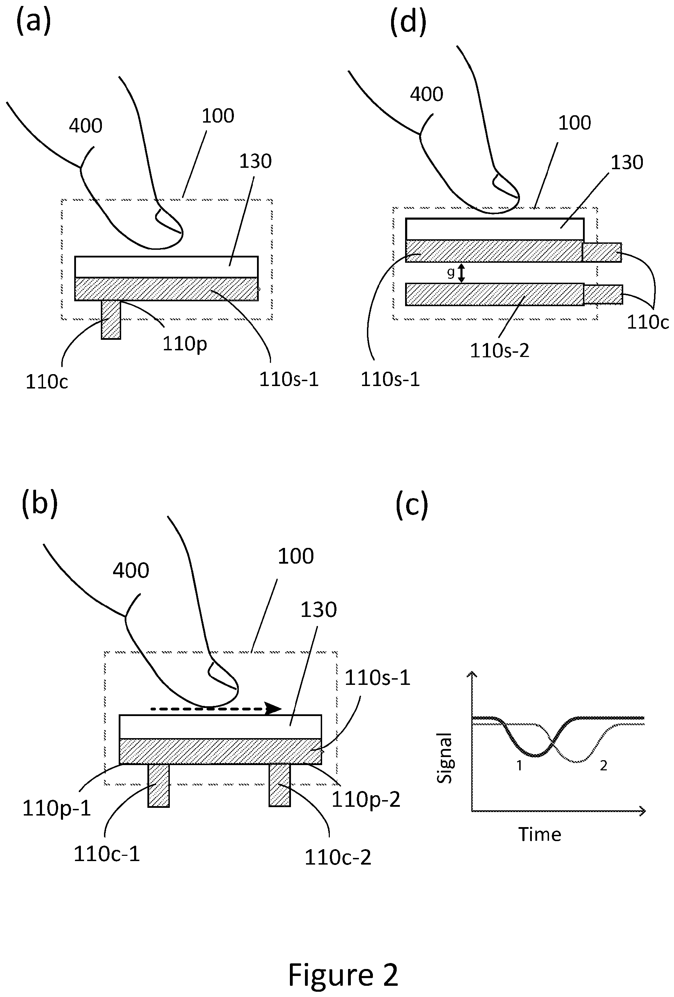

Figures 2(a) to 2(d) illustrate the basic capacitive touch and pressure/force sensing concepts implemented by various embodiments of the peripheral device 100. Figure 2(a) shows a generic touch sensing configuration. In figure 2(a), a layer of non-conductive material 130 is provided on or over a first sensing portion 110s-1 of a sensing electrode 110 as an interface or cover layer. When a conductive object 400 such as a user's finger comes into proximity with the sensing portion 110s-1, such as by touching the non-conductive material 130, the capacitive interaction between the sensing portion 110s-1 the finger 400 changes the self-capacitance of the sensing portion 110s-1, which can be measured by the main device 200 at the connector portion 110c. The change in the measured electrical signal can therefore be used to detect a touch interaction with the peripheral device 100.

In general the material properties (mechanical and/or electrical properties) of the connector portion(s) 110c may be the same or different to the sensing portion 110s of the respective sensing electrode 110. For example, different material properties can be achieved by forming the sensing electrodes 110 using an over-moulding or co-moulding process. The connector portion 110c should be highly conductive to minimise signal attenuation (e.g. an electrical resistivity of less than 1k Ohm/cm). Preferably the sensing portion 110s is also highly conductive. In this case it behaves like an equipotential such that the signal produced by a touch interaction is substantially independent of the touch location on the sensing portion 110a (as is the case for conventional metal capacitive sensing electrodes). This is suitable for simple touch detection. Alternatively, in certain applications the conductivity of the sensing portion 110s can be substantially lower (i.e. more resistive) than the connector portion 110s (e.g. an electrical resistivity of greater than 1k Ohm/cm). In this case the signal produced by a touch interaction exhibits a dependence on the touch location relative to the sensing point 110p where the connector portion 110c meets the sensing portion 110s. This effect is illustrated in figures 2(b) 2(c) which show a sensing electrode 110-1 with two connector portions 110c-1, 110c-2 which probe the capacitance at first and second respective sensing points 1011p-1, 110p-2 and the signals measured at the connector portions 110s-1, 110s-2 as a user's finger 400 moves across the non-conductive material 130 provided over the sensing portion 110s-1. The maximum signal change occurs when the touch location coincides with the respective sensing point 110p-1, 110p-2 and decays as the touch location moves away from the respective sensing point 110p-1, 110p-2.

More complex/advanced touch sensing functions can be achieved, such as detection of touch position, speed, direction and/or amount of movement of said touch position, by using a plurality of highly conductive sensing electrodes 110, or a sensing electrode 110 with a substantially resistive sensing portion 110s.

Figure 2(d) shows a generic pressure/force sensing configuration. In figure 2(d), a first sensing portion 110s-1 of a first sensing electrode 110-1 and second sensing portion 110s-1 of a second sensing electrode 110-2 (which alternatively can also be of the first sensing electrode 110-1) are separated by a distance g. A layer of non-conductive material 130 is again provided on or over the first sensing portion 110s-1 as a cover or interface layer. In this configuration, the first sensing portion 110s-1 is configured to move relative to the second sensing portion 110s-2 in response to a force or pressure applied by the user's finger 400 which changes the distance g. This changes the capacitance between the sensing portions 110s, which can be measured by the main device 200. The capacitance between the sensing portions 110s increases as the distance g is reduced, and the measured electrical signal can therefore be used to detect a pressure/force interaction. The two sensing portions 110s-1, 110s-2 may be separated by gap as shown (e.g. an empty space or void), or a layer of resiliently deformable/compressible non-conductive material, such as silicone, can be provided between the sensing portions 110s-1, 110s-2 (not shown). Touch interactions with the first sensing portion 110s-1 (with negligible applied force or pressure) can be also be detected in the same way as described above for figure 2(a).

In both sensing touch and force sensing configurations, the non-conductive material 130 provided over the first sensing portion 110s-1 can be substantially rigid or resiliently deformable/compressible.

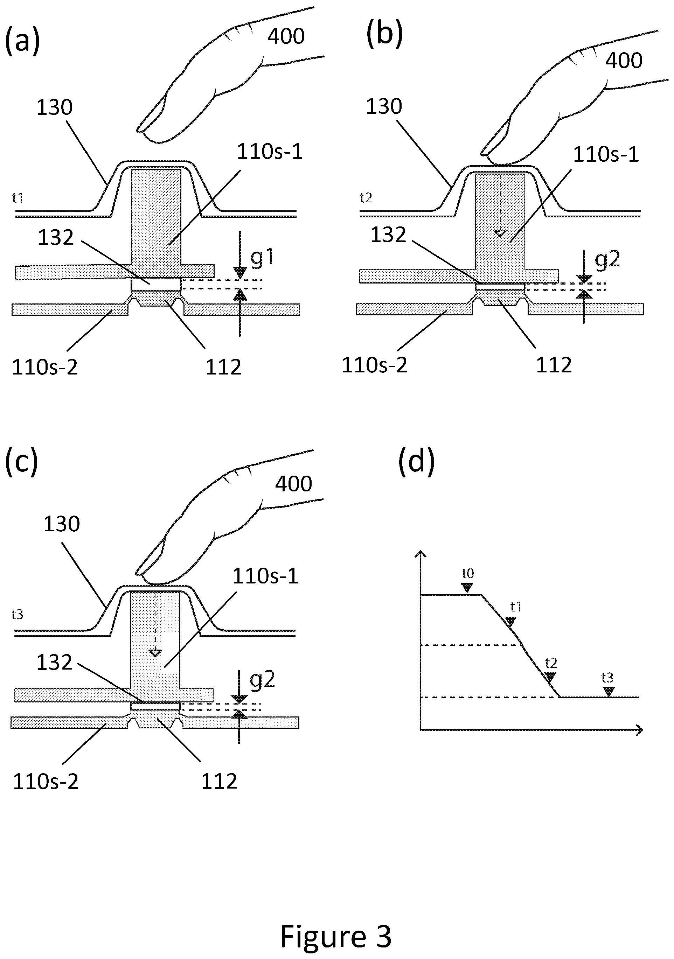

Figures 3(a) to 3(c) show a variation of the configuration in figure 2(c) in which the first and second sensing portions 110s-1, 110s-2 are separated by a resiliently deformable/compressible non-conductive spacer 132 and the second sensing portion 110s-2 comprises a substantially dome-shaped collapsible element 112 configured to collapse and resiliently deform in response to an applied threshold force or pressure. A non-conductive cover layer 130 is provided over the first sensing portion 110c-1. The second sensing portion 110s-2 with the collapsible element 112 is formed of or comprises a substantially flexible and/or deformable conductive thermo-formable material, such as conductive silicone. Likewise, the spacer 132 is formed of or comprises a substantially deformable non-conductive thermo-formable material, such as silicone. The collapsible element 112 provides an additional change in the signal level and tactile feedback to the user when the threshold force/pressure is applied, e.g. to provide a confirmation click or sensation. In this way, three signal level changes are achieved dependent on the force applied, as illustrated in figure 3(d). At time t0, no user interaction is occurring and the first and second sensing portions 110s-1, 110s-2 are separated by a first distance g1. At time t1 the user's finger 400 is brought into proximity and capacitively interacts with the first sensing portion 110s-1, as shown in figure 3(a), providing a first level of signal change. At time t2 the user applies a force/pressure to the cover layer 130 below the threshold. This applied force compresses the spacer 132 such that the first and second sensing portions 110s-1, 110s-2 are separated by a second distance g2 < g1, providing a second level of signal change. At time t3 the user applies a force/pressure to the cover layer 130 at or above the threshold. This applied force collapses the collapsible element 132 and provides a third level of signal change and tactile feedback to the user.

The first and second sensing portions 110s-1, 110s-2 are preferably associated with separate respective first and second sensing electrodes 110-1, 110-2 and the second sensing electrode 110-2 with the collapsible element 132 is optionally or preferably a ground electrode 110g or a ground plane 110gp.

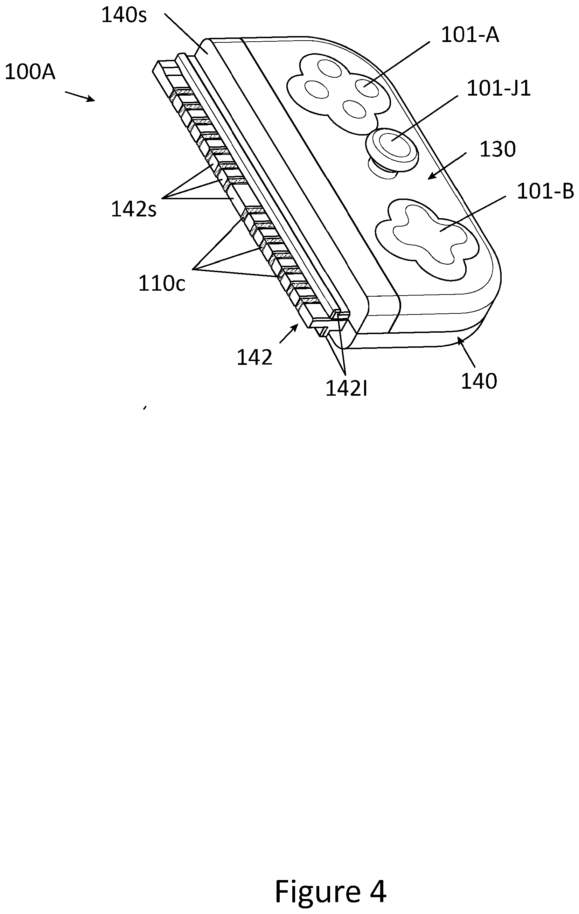

Figure 4 illustrates a specific embodiment of a peripheral device 100A. Figure 5 shows an exploded view of the peripheral device 100 of figure 4. The peripheral device 100A is configured to provide a plurality of different sensing elements 101 for receiving user inputs including touch and pressure sensitive buttons 101-A, 101-B and a joystick 101-J1, as will be described in more detail below.

The peripheral device 100A comprises a plurality of sensing electrodes 110, a housing 140, a cover 130, and a movable actuator 160 in the form of a joystick. The housing 140 is formed of a substantially rigid non-conductive thermo-formable material (e.g. non-conductive ABS) and is configured to support and retain the sensing electrodes 110. The cover 130 is formed of a substantially soft and resiliently deformable/pliable non-conductive thermo-formable material, such as non-conductive silicone, and is provided over at least a portion of the housing 140 to provide a tactile "soft touch" interface layer.

The housing 140 comprises a plurality of openings 140o-1 through which one or more sensing portions 110s at least partially extend for receiving a user interaction such as a touch or applied pressure/force. The housing 140 further comprises an opening 140o-2 through which the movable actuator 160 extends for receiving a user interaction (i.e. a force that moves the actuator 160) and transmitting the user interaction to one or more respective sensing portion 110s located within the housing 140 for detection, as will be described in more detail below.

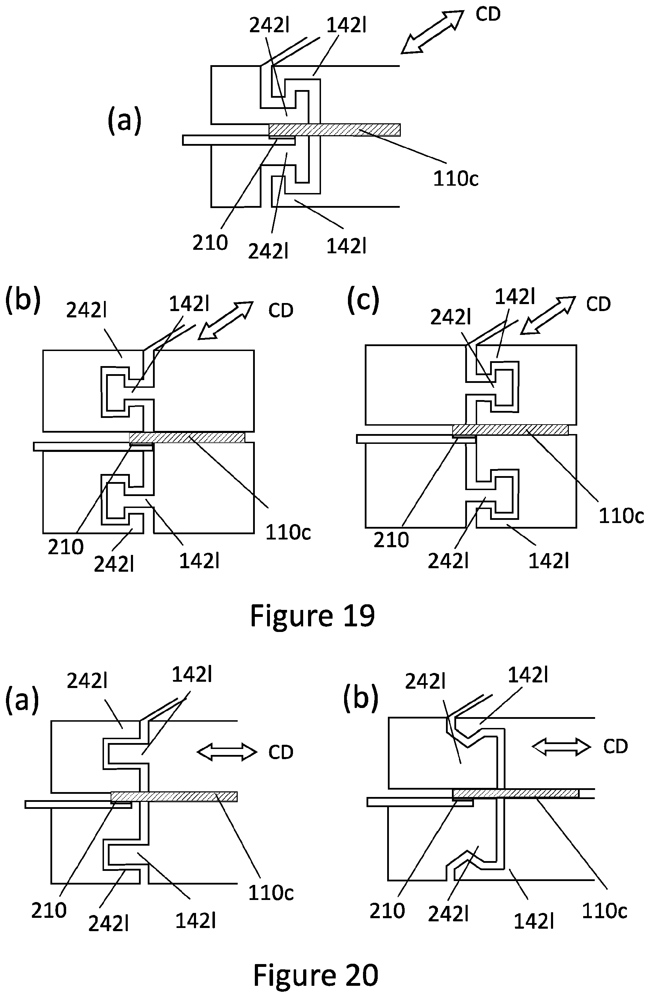

In the illustrated embodiment, the touch and pressure sensitivity input buttons 101-A, 101-B operate as described above with reference to figures 3(a) to 3(d). As such, each input button 101-A comprises a respective first sensing electrode 110-1 and a second sensing electrode, which in this embodiment is provided by a single sensing electrode configured as a ground plane 110g. Each opening 140o-1 receives the first sensing portion 110s-1 of the first sensing electrode 110-1 of a respective input button 101-A to allow a force to be applied to it through the opening 140o-1 to change the separation g between it and the ground plane 110g. The ground plane 110g comprises a plurality of collapsible elements 112 associated with the respective buttons 101-A. Each collapsible element 112 is configured to collapse and resiliently deform in response to a threshold force/pressure applied to the first sensing portion 110s-1 of the respective button 101-A. As such, the sensing electrode 110g forming the ground plane is formed of a substantially flexible and resilient deformable conductive thermo-formable material, such as conductive silicone. A non-conductive spacer 132 formed of resiliently deformable non-conductive thermo-formable material, such as non-conductive silicone, is provided between each associated collapsible element 112 and first sensing portion 110s-1. Operation of the joystick 101-J1 will be described in detail below with reference to figures 19(a) to 21(c).

The soft cover 130 is provided over the openings 140o-1 to inhibit ingress of dust and water/moisture while allowing a force to be applied to the underlying sensing portion 110s-1. In the illustrated embodiment, the actuator 160 also extends through an opening in the cover 130, however, the soft cover 130 may instead also be provided over the actuator 160 (not shown).

The housing 140 comprises an integral connector body portion 142 configured to engage the connector portions 110c of the sensing electrodes 110 to support and hold them in place.

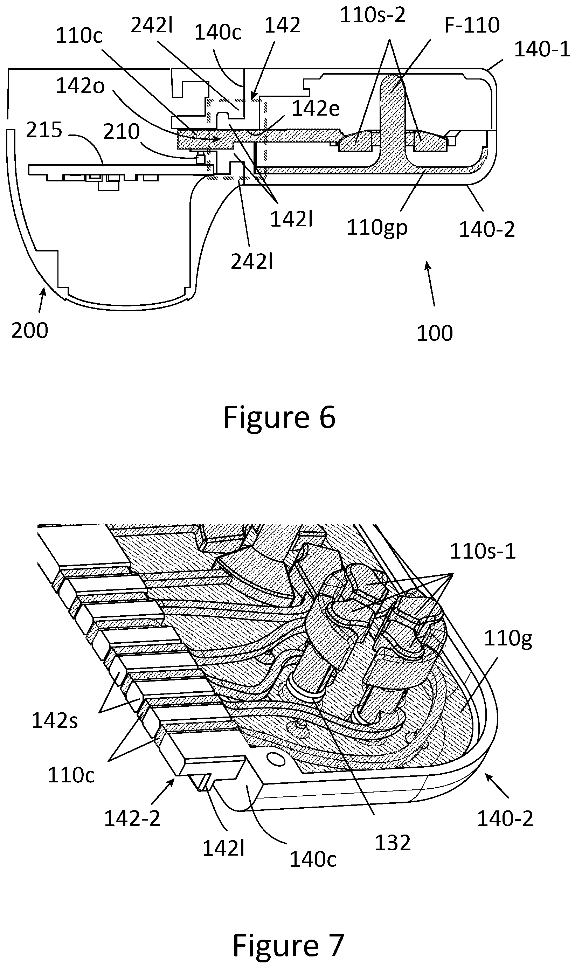

Figure 6shows a cross-section of an example control device formed by the connection of the peripheral device 100A of figure 4 to an example main device 200, showing the connector body portion 142 more clearly. The connector body portion 142 is located on a connection side 140c of the housing 140 and comprises one or more openings 142o in the connection side 140c through which the connector portions 110s extend.

The connector portions 110c can be held in place by frictional engagement, or they can be integrally formed with the connector body portion 142 through a co-moulding process. In the embodiment of figures 5 and 6, the connector body portion 142 is defined by two separate parts 142-1, 142-2 integrally formed with respective separate parts 140-1, 140-2 of the housing 140 that are secured together during assembly of the peripheral device 100. In this case, to retain the connector portions 110s by frictional engagement, the opening 142o can be defined/formed between a pair of opposing engagement surfaces 142e on respective parts 142-1, 142-2 of the connector body portion 142 that frictionally engage and grip the connector portions 110c when assembled. Alternatively, the connector portions 110 can be integrally formed with one of the connector body portions 142-1, 142-2 (not shown). In another embodiment (not shown), the connector body portion 142 is not formed from two parts, but is integrally formed with one of the one or more parts 140-1, 140-2 of the housing 140. In this case, the connector portions 110s can be integrally formed with the connector body portion 142.

Figure 7 shows the peripheral device 100A of figure 4 in a partially assembled/disassembled state without the upper housing part 140-1 in place. The connector portions 110c are arranged in an array that extends for a length along the connection side 140c of the housing 140 (see also figure 4). In this embodiment, the connector body portion 142 comprises integral spacer elements 142s disposed between adjacent connector portions 110c to position them and maintain a separation between them. In the illustrated embodiment, the spacer elements 142s are integrally formed with lower part 142-2 of the connector portion 142 to simplify assembly.

With reference to again to figure 5, a non-conductive support element 150 with one or more recesses or projections can also be provided within the housing 140 to provide additional support for one or more the sensing electrodes 110. Additionally or alternatively, the housing 140 may comprise one or more recesses and/or projections that cooperate with one of more sensing electrodes 110 to help position and support them (not shown).

The connector body portion 142 of the housing 140 also forms/provides an attachment or locking mechanism configured to engage a corresponding locking mechanism of the main device 200 to releasably attach the peripheral device 100A to the main device 200. In the embodiment of figure 4, the connector body portion 142 forms a sliding rail mechanism comprising locking members 142l with a profile configured to direct sliding inter-engagement with complementary locking members 242l of the main device 200 in a connection direction CD substantially parallel to the array of connector portions 110c.

The locking members 1421 form rail members that extend at least part of the length of the connector body portion 142 in the connection direction CD and are configured to slidingly inter-engage the complementary rail members 242l of the main device 200. The rail members 142l comprise a longitudinally extending projection configured to be received by and engage with a longitudinally extending recess or channel of the respective rail members 2421 of the main device 200, or vice versa.

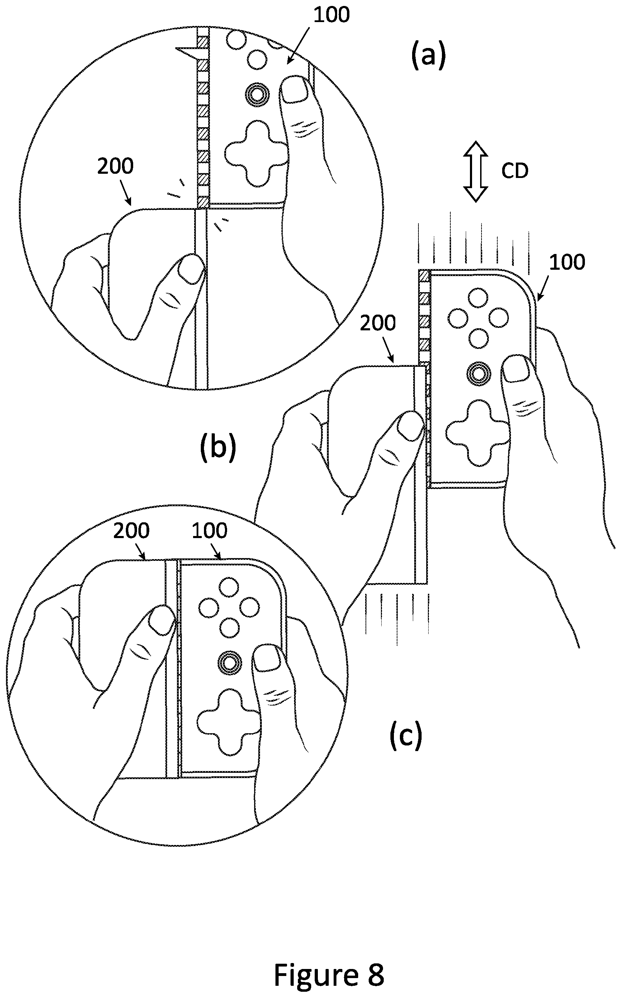

Figures 8(a) to 8(c) illustrate how the peripheral device 100A attaches to the main device. In first step, a longitudinal end of the rail members 142l of the peripheral device 100A is aligned with a longitudinal end of the rail members 242l of the main device 200, as shown in figure 8(a). In a second step, the longitudinal end of the rail members 142l of the peripheral device 100A is inserted into a longitudinal end of the main device 200 and the continued movement in the connection direction CD causes sliding engagement of the respective rail member 142l, 2421 until a connected position is reached, as shown in figure 8(b) and 8(c).

Sliding engagement of the rail members 1421, 2421 brings the connector portions 110c into physical electrical contact with the respective electrical contacts 210 of the main device 200 establishing an electrical connection therebetween, as described in more details below. An end (frictional) stop or other means can be provided at an end of the rail members 142, 2421 of the peripheral device and/or main device 200 to prevent sliding past the connected position in which the connector portions 110c and electrical contacts 210 are aligned (not shown). Frictional engagement of the rail members 1421, 242l inhibits unintentional movement away from the connected position. Disconnection or disengagement of the peripheral device 100A from the main device 200 requires applying a force in the opposite direction.

In the embodiment of figure 6, the electrical connectors 210 of the main device 200 are metal connectors comprising a biasing element in the form of a spring finger configured to bias against the non-metallic connector portions 110c to establish and maintain a stable electrical contact therebetween. However, it will be appreciated there are a number of alternative ways to establish a releasable electrical connection between the non-metallic connector portions 110c of the peripheral device 100A and metal or non-metallic electrical contacts 210 of the main device 200, as will be described further below with reference to figures 26(a) to 27(d).

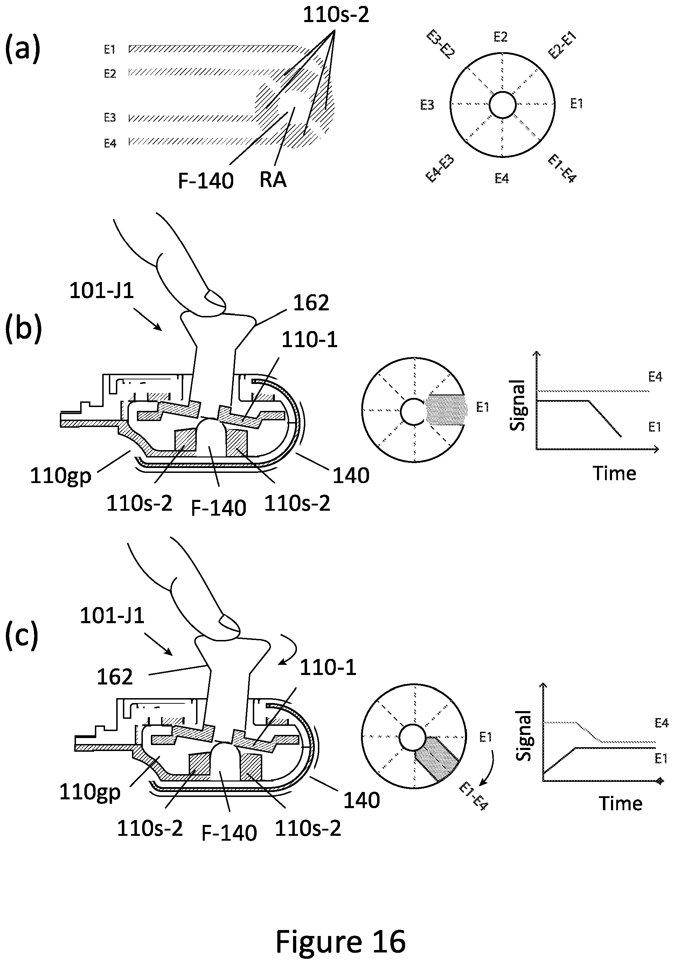

A number of different peripheral devices 100 may be interchangeably connectable to the main device 200, with each peripheral device 100 having a different sensing electrode 110 configuration for providing different modular control devices with different user interaction functionalities (see figures 16 to 18 described below). It is therefore necessary for the main device 200 (or the remote computing device 300) to be able to identify the particular connected peripheral device 100 in order to know how to interpret/analyse the measurement data and determine the user interactions.

When connected, a number of connector portions 110c will be in contact with an equal number of electrical contacts 210 including at least one ground contact 210g as described above. The peripheral devices 100 are configured so that at least one sensing electrode 110 is physically connected to both the ground contact 210g and one of more sense contacts 210s of the sensing circuit to provide a specific signal pattern or sequence detectable by the control unit 240 of the main device 200 (or by the remote computing device 300) for identifying the particular connected peripheral device 100.

Figures 9(a) and 9(b) show how two different peripheral devices 100, labelled device A and device B, connected to the main device 100 can be distinguished. A sensing electrode configured as a ground electrode 110g, which may be a ground plane, comprises two or more connector portions 110c, in this example two connector portions 110c. One of the connector portions 110c is configured to connect to a ground contact 210g (Gnd) of the main device 200 and the other is configured to connect to a respective sense contact 210s of the main device 200 (contact EL6 in device A and contact EL7 in device B). In this way, when the devices 100, 200 are connected, the ground electrode 110g shorts the specific respective sense contact(s) 210s to ground and thereby provides a specific signal pattern or sequence at the sense contacts 210s of the sensing circuit of the main device 200 which can be detected and used to identify the specific peripheral device 100 from other peripheral devices 100. The capacitive sensing chip measures the signals at each sensing electrode 210s and those connected to ground provide a distinct signal timecourse and level which can readily be distinguished from those which are not, as illustrated in figures 9(c) and 9(d). In the above example, the control unit 240 (or remote computing device 300) would detect or determine that contact EL6 is grounded when device A is connected and contact EL7 is grounded when device B is connected. This detected signal pattern can be compared to a list of stored signal patterns associated with different peripheral devices 100 to identify the specific connected peripheral device 100. The ground electrode 110g can be configured with any number of connector portions 110c positioned in predefined locations in the array of connector portions 110c to connect to different sensing contacts 210s and provide different unique signal patterns.

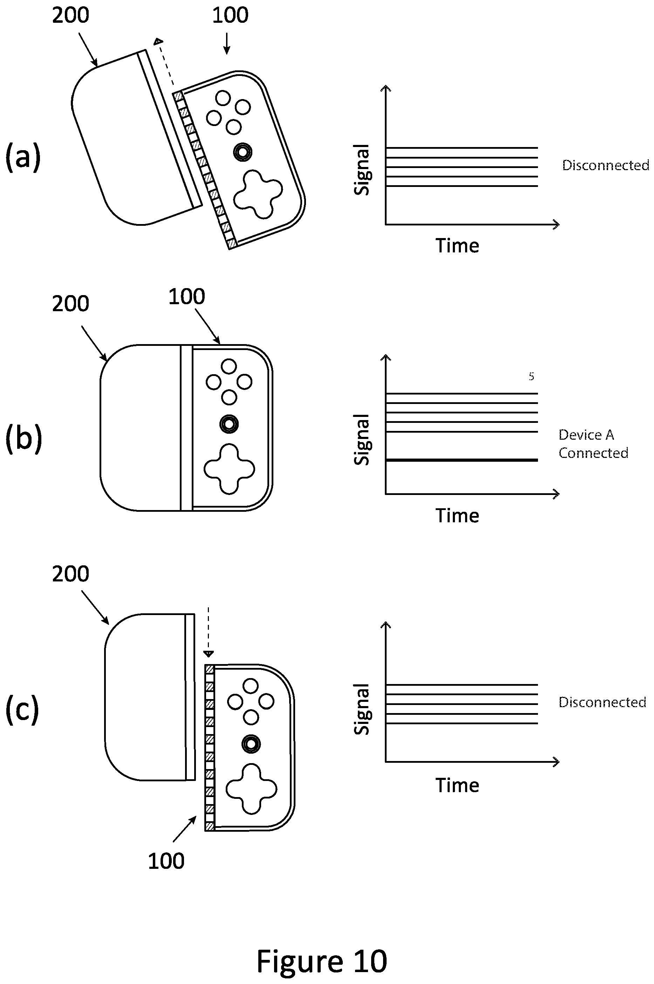

The different signal patterns at the sense contacts 210s of the main device 200 can also be used to identify when a peripheral device 100 is connected to the main device 200 or not. This is illustrated in figures 10(a) to 10(c). When the peripheral device 100 is disconnected, all the raw signals measured at the sense contacts 210s are at a baseline level representative of a current "untouched" capacitance of the sense contact 210s. When a peripheral device 100 is connected, the ground electrode 110g shorts specific respective sense contact(s) 210s to ground providing a number of signals with distinct timecourses and levels which are distinguishable from their respective baselines levels. This is detectable by the control unit 240 (or remote computing device 300) and indicates a peripheral device 100 is connected. Once disconnected, all the measured signals are restored to their baseline levels indicating that no peripheral device is connected. In order to differentiate between a peripheral device 100 being connected or not in this way, the control unit 240 (or remote computing device 300) should be configured to obtain raw measurement data from the capacitive sensing chip 230, rather than implementing an adaptive automatic baselining system. With an adaptive automatic baselining system, the signals from each shorted sense contact 210s would be automatically updated to a (predefined) baseline level (as soon as the peripheral device 100 connects to the main device 200) inhibiting the ability to recognise whether a device 100 is attached purely through the signal pattern.

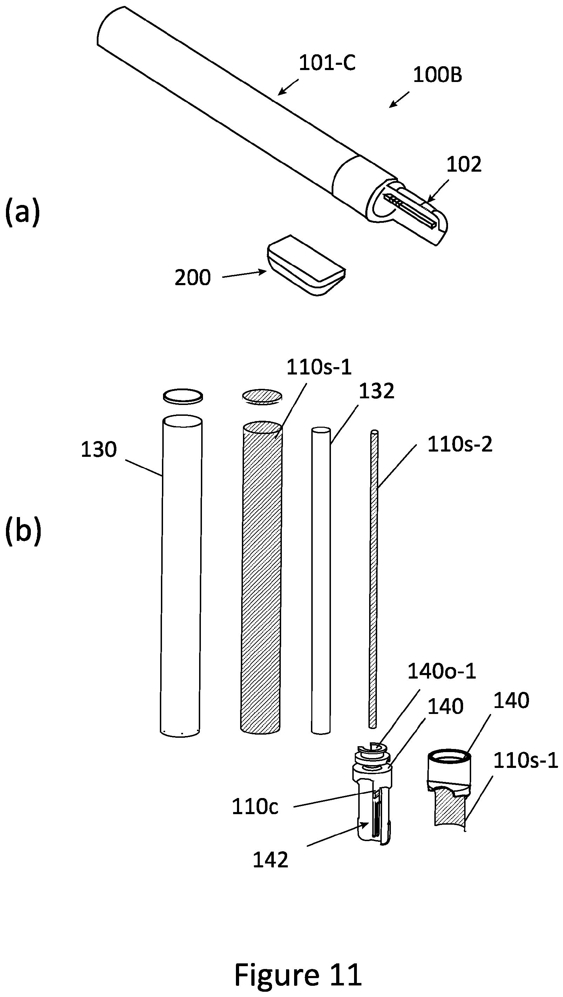

Figures 11(a) to 13(b) show different specific embodiments of a peripheral device 100B, 100C, 100D. Similar to peripheral device 100A described above, each peripheral device 100B, 100C, 100D comprises one or more sensing elements 101 for receiving a user input and providing electrical signals to the main device 200, but has a different 3D shape, size, and configuration of sensing electrodes 110 and non-conductive elements with different material characteristics (e.g. for different tactile "feel") to provide a coherent modular control device with different user interaction functionalities. Each peripheral device 100A, 100B, 100C, 100D comprises an electrical connector 120 and a sliding rail mechanism for interchangeably connecting to the same main device 200. As such, each peripheral device 100A, 100B, 100C, 100D fundamentally changes how the user uses and interacts with the modular control device.

In the embodiment of figure 11(a), the peripheral device 100B configured as a sword-like device with a blade portion 101-C and a handle portion 102. The blade portion 101-C is a sensing element 101 for providing electrical signals to the main device 200 in response to touch, force or pressure applied to the blade portion 101-C, e.g. through an impact between the blade portion 101-C and an object which may be another peripheral device 100.

Figure 11(b) shows an exploded view of the peripheral device 100B. The handle portion 102 comprises a rigid non-conductive housing 140 with a connector body portion 142 and a sliding rail mechanism for attaching to a main device 200. The blade portion 101-C operates in a similar way to that described with reference to figure 2(d). In this case, the first and second sensing portions 110s-1, 110s-2 are separated by a spacer 132 formed of substantially deformable non-conductive thermo-formable material and the first (outer) sensing portion 110s-1 is covered by a cover 130 formed of substantially deformable non-conductive thermo-formable material. The first sensing portion 110s-1 is formed of substantially soft or deformable (e.g. formed of conductive EVA) and the second portion 110-2 is substantially rigid (e.g. formed of conductive ABS). The second (inner) sensing portion 110s-2 is substantially cylindrical, and the spacer 132, first sensing portion 110s-1 and cover 130 are concentric hollow cylindrical elements configured to fit over each other in order, as indicated in figure 11(b). The sensing portions 110s-1, 110s-2 extend through an opening 140o-1 in the housing 140 where the connector portions 110c of the respective sensing electrodes 110-1, 110-2 are supported and retained by the connector body portion 142. Another sensing portion 110s-1 may also be provided in or on the housing 140 as shown. This sensing electrode 110-1 can be exposed or isolated from the outside by a non-conductive material, e.g. the housing 140 or a cover 130 (not shown). This additional sensing electrode 110-1 can be used as an additional sensing element for detecting when the handle portion 102 is being gripped or held by a user, e.g. operating as described with reference to figure 2(a). Alternatively, this sensing electrode 110-1 can be used as a ground plane 110gp.

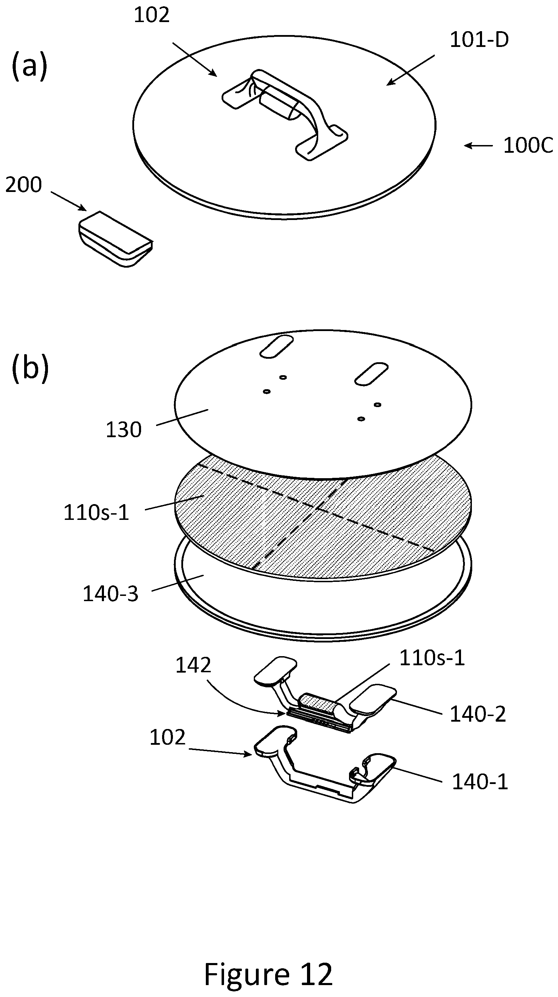

In the embodiment of figure 12(b), the peripheral device 100C is configured as a shield-like device with a shield portion 101-D and a handle portion 102. Similar to the sword 100B, the shield portion 101-C is a sensing element 101 for providing electrical signals to the main device 200 in response to proximity with a conductive object, e.g. through contact between the shield portion 101-C and a conductive object, which may be another peripheral device 100 such as the sword-like device 110C.

Figure 12(b) shows an exploded view of the peripheral device 100C. The handle portion 102 comprises a rigid non-conductive housing 140 with a connector body portion 142 and a sliding rail mechanism for attaching to a main device 200. The housing 140 comprises at least two parts 140-1, 140-2 that fit together to support and retain the sensing electrodes 110. The shield portion 101-D operates as described with reference to figure 2(a). A non-conductive cover 130 is provided over the sensing portion 110s as an interface layer. The shield sensing portion 110s-1 can be formed of a substantially rigid or deformable material. The shield sensing portion 110s-1 connects to the main device 200 through contact with another sensing electrode 110 with a connector portion 110c (not shown). The shield portion 101-D can comprise multiple shield sensing portions 110s-1 distributed over the area of the shield portion 101-D, to provide spatially resolved touch/contact information. The shield sensing portion(s) 110s-1 can be supported by another portion 140-3 of the housing 140 as shown. Alternatively, the non-conductive cover 130 can be provided on both sides of the sensing portion 110s-1 (i.e. in the place of the housing portion 140-3 shown). The cover 130 may be formed of or comprise a fabric or a non-conductive thermo-formable material. For example, a fabric cover 130 can be formed over a substantially soft or deformable shield sensing electrode(s) 110 (e.g. formed of conductive EVA) by a heat press technique. Another sensing portion 110s-1 may also be provided in the housing 140 of the handle portion 102 as shown. This sensing electrode 110-1 can be exposed or isolated from the outside by a non-conductive material, e.g. the housing 140 or a cover 130 (not shown). Similar to in the sword-like device 100C, this sensing electrode 110-1 can be used as an additional sensing element for detecting when the handle portion 102 is being gripped or held by a user, e.g. operating as described with reference to figure 2(a). Alternatively, this sensing electrode 110-1 can be used as a ground plane 110gp. In another embodiment, the shield portion 101-D may further comprise a ground plane 110gp separated from the first sensing electrode by a non-conductive spacer 132 (not shown). The ground plane 110gp is located on the handle side of the shield portion 101-D to reduce potential interference caused by proximity of the user's hand to the shield sensing portion(s) 110s-1 when holding the handle portion 102.

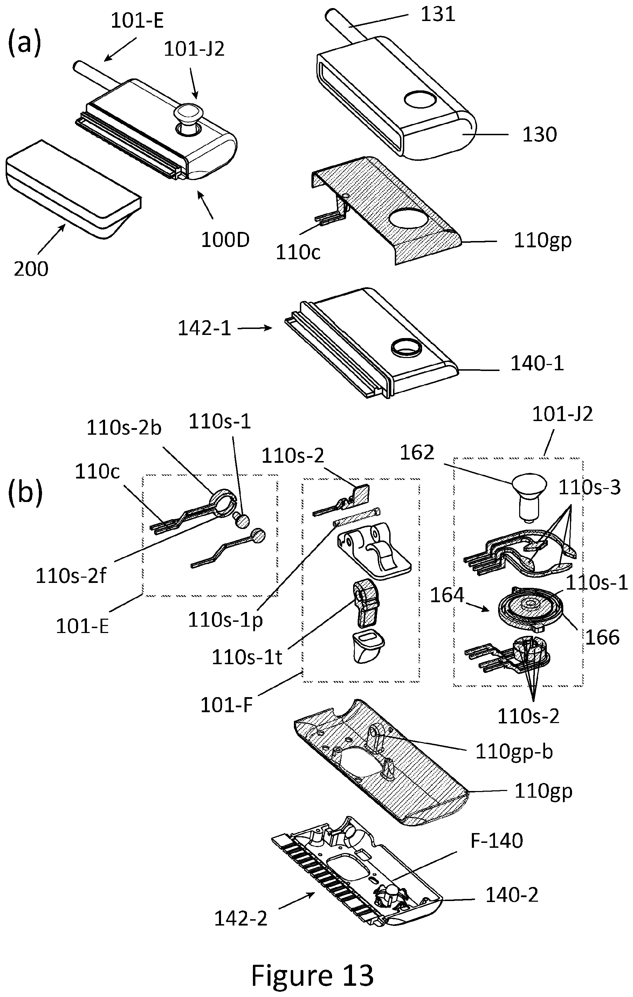

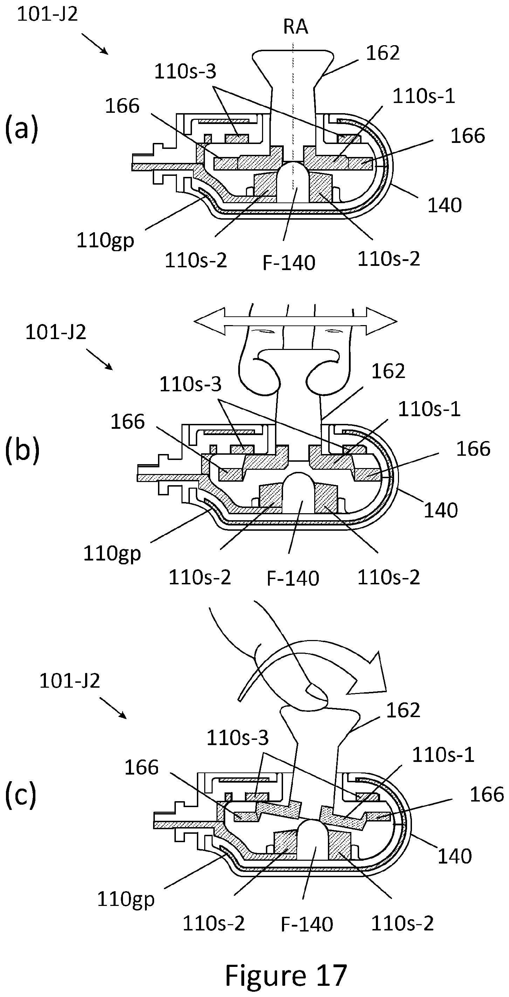

In the embodiment of figure 13(a), the peripheral device 100D has three sensing elements 101-E, 101-F, 101-J2 for providing electrical signals to the main device 200 in response to different user interactions. Sensing element 101-E is a sling shot, sensing element 101-G is a trigger and sensing element 101-J2 is a joystick. Figure 13(b) shows an exploded view of the peripheral device 100D. The peripheral device 100D comprises a plurality of sensing electrodes 110, a rigid non-conductive housing 140 with a connector body portion 142 and a sliding rail mechanism for attaching to a main device 200, similar to device 100A. A cover 130 formed of substantially deformable non-conductive material is provided over the housing 140. Two of the sensing electrodes are configured as a ground plane 110gp for respective first and second parts 140-1, 140-2 of the housing 140. The sling shot 101-F and the trigger 101-G operates in a similar way to that described in figure 2(d). A force or pressure applied to the first sensing portion 110s-1 moves it relative to the second sensing portion 110s-2 and changes the capacitive interaction between them. In the case of the trigger 101-G, the first sensing portion 110s-1 is configured as a moveable trigger 110s-1t which is in contact with the ground plane 110gp through the pivot pin 110s-1p and integral pivot bracket 110gp-b. In the case of the sling shot 101-F, the first sensing portion 110s-1 is coupled to an elongate flexible member 131 of the cover 130 such that a force applied to the flexible member 131, such as a bending force, causes displacement of the first sensing portion 110s-1 relative to a pair of second sensing portion 110s-2f, 110s-2b. In this case, the first sensing electrode 110-1 is also connected to ground. The pair of second sensing portion 110s-2f, 110s-2b are configured as directional electrodes for detecting relative displacement of the first sensing electrode 110s-1 to the front (110s-2f) and back (110s-b). Operation of the joystick 101-J2 will be described in detail below with reference to figures 17(a) to 18(c).

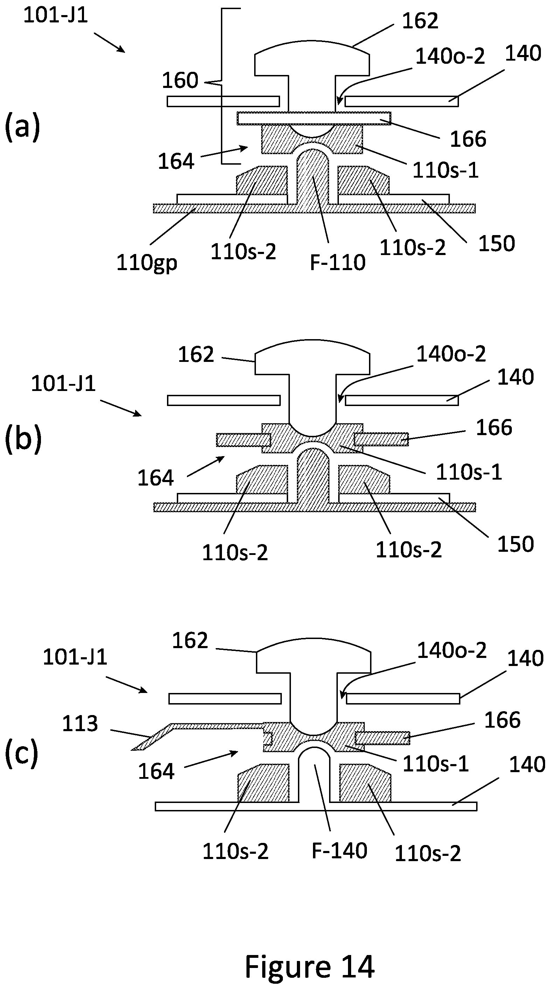

Figure 14(a) shows a schematic cross-section of the joystick sensing element 101-J1 of the peripheral device 100A of figures 4 and 5. The operating principle of the joystick 101-J1 is based on that described with reference to figure 2(d) in which first and second sensing portions 110s-1, 110s-2 are moveable relative to each other. The joystick 101-J1 comprises a movable actuator 160 with a non-conductive handle portion 162 that extends through an opening 140o-2 in the housing 140 and a base portion 164 located within the housing 140. The base portion 164 comprises a first sensing electrode 110 with a first sensing portion 110s-1 and is configured to pivot about a fulcrum F-110 to move the first sensing portion 110s-1 relative to a set of second sensing portions 110s-2 distributed about the fulcrum F-110 and positioned below the base portion 164/first sensing portion 110s-1. This changes the capacitance between the first sensing portion 110s-1 and the second sensing portions 110s-2 and provides one or more electrical signals for detecting a tilt direction and angle of the joystick 101-J1 with respect to the housing 140 or a rest axis RA of the actuator 160, as described below.

Each second sensing portion 110s-2 is associated with separate second sensing electrode 110-2. The fulcrum F-110 is integrally formed with the ground plane 110gp. The first sensing electrode 110-1 does not include a connector portion 110c and is configured to connect to the sensing circuit of the main device 200 through electrical contact with the fulcrum F-110. In this example, the first sensing electrode 110-1 rests and pivots directly on the fulcrum F-110. The joystick 101-J1 also comprises a resiliently deformable biasing element 166 coupled to the actuator 160 and configured to bias the actuator 160 towards the fulcrum F-110 and to a rest angular position (e.g. a central position) aligned with a rest axis RA when no force is applied to the actuator 160 and deform to permit movement (e.g. tilting) of the actuator 160 away from the rest position when a force is applied. The biasing element 166 is coupled to the movable actuator 160 at a radially inner end and is coupled to and/or engaged with the housing 140 or another stationary element of the device 100 at a radially outer end. As such, the radially outer end is fixed or stationary relative to the actuator 160. With reference to figure 5, the biasing element 166 is or comprises a spiral spring. However, it will be appreciated that the biasing element 166 can take other forms, e.g. a resiliently deformable disk-like member, or there may be a plurality of resiliently deformable biasing elements 166 coupled to and distributed about the actuator 160 (not shown). The biasing element(s) 166 can be formed of a non-conductive material as shown in figure 14(a), or a conductive material connected to or integrally formed with the first sensing electrode 110-1 as shown in figure 14(b).

Figure 14(c) shows an alternative configuration of the joystick 101-J1 in which the fulcrum F-140 is integrally formed with the non-conductive housing 140. In this case, the first sensing electrode 110-1, and optionally the biasing element 166, is configured to electrically contact the ground plane 110gp at a different point, e.g. through a connector element 113, as shown. The connector element 113 may also serve to fix the radially outer end of the biasing element 166 relative to the actuator 160.

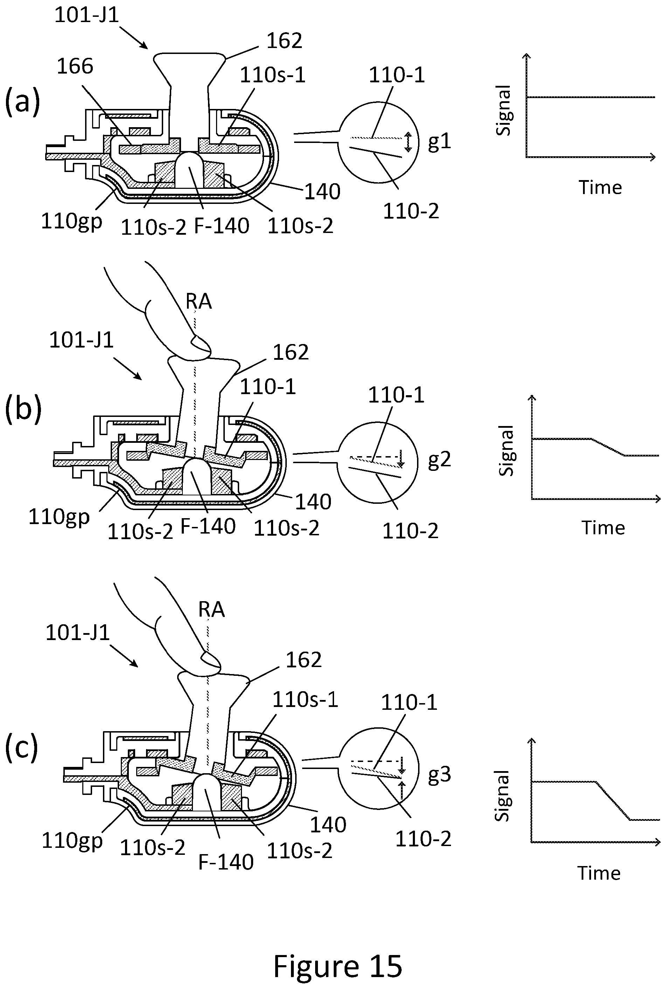

Figures 15(a) to 15(c) illustrate how the joystick 101-J1 operates in more detail. In this illustrated example the fulcrum F-140 is integrally formed with the housing 140 but the operating principle is the same for either a non-conductive or conductive, the only difference being how the first sensing electrode 110-1 is connected to ground plane 110gp. In operation, the capacitance between the first sensing electrode 110-1 and each of the second sensing electrodes 110-1, 110-2 of the joystick 101-J1 is measured by the capacitive sensing chip 230. When no force is applied to the handle portion 162, the actuator 160 is in the rest position and the first and second sensing portions 110s-1, 110s-2 are separated by a first distance g1, producing a baseline signal level measured between them as shown in figure 15(a). A lateral force applied to the handle portion 162 causes the actuator 160 to pivot about the fulcrum F-140 away from the rest axis RA in a given tilt direction. This reduces the separation between the first sensing portion 110s-1 and a second sensing portion 110s-2 to a second distance g2<g1 producing a change in the signal measured between them from the baseline level to an active level, as shown in figure 15(b). An active level may be defined by a suitable threshold change, as is known in the art. Further pivoting of the base portion 164 in the same direction further reduces the separation between the first sensing portion 110s-1 and the second sensing portion 110s-2 to a third distance g3<g2, producing a greater change in the signal measured between them, as shown in figure 15(c). In this way, a tilt angle relative to the rest axis RA of the actuator 160 can be determined based on the change in signals measured between the first and second sensing electrodes 110-1, 110-2 of the joystick 101-J1.

Figures 16(a) to 16(c) illustrate how a tilt direction can be determined from the signals measured between the first and second sensing electrodes 110-1, 110-2 of the joystick 101-J1. Figure 16(a) shows the set of second sensing portions 110s-2 (in this example four) distributed equally about the fulcrum F-140 and rest axis RA and a corresponding polar map show how specific signals E1-E4 and pairs of signals measured from the second sensing electrodes 110-2 are associated with a tilt direction about the rest axis RA. By monitoring the change in signal from each second sensing electrode 110-2, the tilt direction can be determined, as described below. With reference to figure 16(b), when the handle portion 162 is tilted from the rest position in a direction aligned with one of the second sensing portions 110s-2 the signal measured from that sensing electrode, in this example E1, will change from its baseline level to an active level while the signal measured from an adjacent second sensing portion 110s-2, in this case E4, will exhibit a smaller or negligible change. Similarly, when the handle portion 162 is tilted in a direction oriented between two adjacent second sensing portions 110a-2 the signals measured at the respective sensing electrodes, e.g. signals E1 and E4, will both change from their baseline levels to substantially equal or similar active levels. Figure 16(c) shows an example where the tilt direction is changed from aligning with one sensing portion 110s-2, as in figure 16(b), to two sensing portions 110s-2. In this case, the signals measured at the respective sensing electrodes, in this example signals E1 and E4, both change from their previous levels to substantially equal or similar active levels, as shown. In this way, the tilt direction can be determined based on the specific signals that change, and the tilt angle can be determined from the amount of change in those specific signal levels.

Figures 17(a)-17(c) show cross-sections of the joystick 101-J2 of the peripheral device 100D of figures 13(a) and 13(b). The joystick 101-J2 is essentially the same as the joystick 101-J1 shown in figure 14(c) and described above, but additionally comprises a set of third sensing portions 110s-3 distributed about the fulcrum F-110/rest axis RA and positioned above the base portion 164/first sensing electrode 110. In this embodiment, the actuator 160 is moveable between a lower position in which the base portion 164 is pivotable about the fulcrum F-140 for detecting a tilt direction and angle of the joystick, as shown in figure 17(b), and an upper position in which the base portion 164 is translatable in one or more lateral directions with respect to the fulcrum F-140 and housing 140 as shown in figure 17(c).

As described above, the biasing element 166 is configured to bias the actuator 160 towards the fulcrum F-140 and a rest angular position, and thus also towards the lower position. In the lower position, the joystick 101-J2 operates as described above for the joystick 101-J1. Tilt angle and direction relative to the rest axis RA are determined from capacitance signals measured between the first sensing portion 110s-1 and the set of second sensing portions 110s-2. In the upper position, the actuator 160 is lifted away from the fulcrum F-140 and is free to move laterally. In the upper position UP, lateral movement of actuator 160 moves the first sensing portion 110s-1 relative to the set of third sensing portions 110s-3 and changes the capacitance between them. This enables lateral translation of the actuator 160 relative to the rest axis RA to be determined from capacitance signals measured between the first sensing portion 110s-1 and the set of third sensing portions 110s-3, as described below.

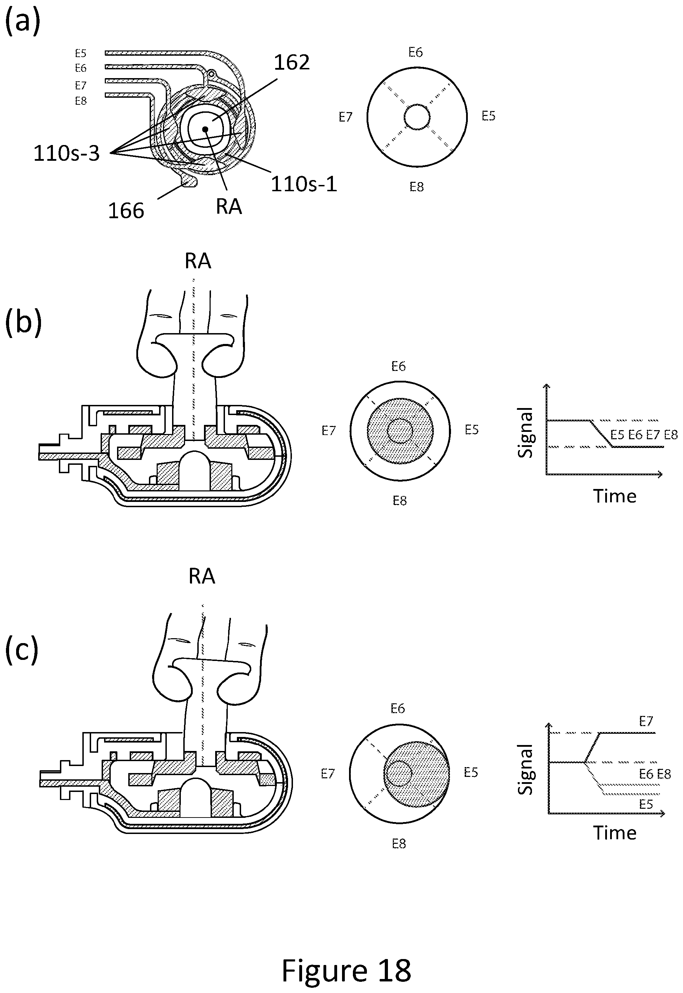

Figure 18(a)-18(c) illustrate how a direction and amount of lateral translation of the actuator 160 can be determined from the signals measured between the first and third sensing electrodes 110-1, 110-3 of the joystick 101-J2. Figure 18(a) shows the shows the set of third sensing portions 110s-3 (in this example four) distributed equally about the rest axis RA and a corresponding polar map show how the signals E5-E8 measured from the third sensing electrodes 110-3 are associated with a lateral direction about the rest axis RA. When no force is applied to the handle portion 162, the actuator is in the lower (rest) position and the capacitive interaction and signals measured between the first sensing electrode 110-1 and the set of third sensing electrodes 110-3 is at a baseline level. With reference to figure 18(b), when the handle portion 162 is lifted from the lower position to the upper position with no lateral translation, the signals measured from each third sensing electrode (E5-E8) will change from its baseline level to a substantially equal or similar active level. Once in the upper position, the signal levels measured at each third sensing electrode 110-3 are determined primarily by the spatial overlap of the third sensing portions 110s-3 with the first sensing portion 110s-1. The third sensing portions 110s-3 are shaped and configured to exhibit a change in overlap with lateral displacement from the rest axis RA. With reference to figure 18(c), when the handle portion 162 is then laterally translated away from the rest axis RA in a direction aligned with one of the third sensing portions 110s-3 the signal measured from that third sensing portion 110s-3, in this example E5, increases while the signal measured from an opposite third sensing portion 110s-3, in this case E7, decreases. Alternatively, the third electrode portions 110s-3 may be configured such that translation of the actuator 160 towards a given third electrode portion 110s-3 causes the signal measured from the opposite sensing portion 110s-3 to increase. Further translation in the same direction causes further disparity between the signals at the opposite third electrode portions 110s-3. In this way, the lateral translation direction can be determined based on the specific signals that change, and the amount of translation can be determined from the amount of change in those specific signal levels.

Although the specific embodiments of a peripheral device 100A, 100B, 100C, 100D shown in figures 4-8(c) and 11(a)-13(b) include a sliding rail mechanism for releasably attaching to the main device 200, there are a number of alternative locking mechanisms suitable for this purpose which can be implemented. Figures 19(a) to 19(c) show alternative rail member 1421, 2421 configurations. Figures 20(a) and 20(b) show examples of plug and socket type locking mechanisms, in which the locking members 142l of the peripheral device 100 are configured mechanically inter-engage with complementary locking members 2421 of the main device 200 through a force applied in a connection direction CD which is substantially perpendicular to the array of connector portions 110c. The locking members 142l of the peripheral device 100 may be male locking members with a projection configured to engage with a recess of a female locking, or vice versa. Engagement may be via frictional engage or interference fit, and/or a snap-fit as shown in figure 20(b). In the configuration of figure 20(b), the locking members 142l comprise projections configured to resiliently deform to snap into engagement with the recess of the other locking member 2421 upon application of a force in the connection direction CD, as is known in the art.

Alternatively, the locking mechanism can be based on magnetic engagement. In this case, the connector body portion 142 does not comprise locking members, but instead comprises magnets that interact with magnets of the opposite polarity on the main device 200 to releasably hold the two devices 100, 200 together in the connection position (not shown).

There are also a number of different ways to establish electrical connection between the non-metallic connector portions 110c of the peripheral device 100 and the electrical contacts 210 of the main device 200 suitable for mechanical and/or magnetic locking mechanisms. In the embodiment of figure 6, the electrical contacts 210 of the main device 200 are metallic spring fingers that contact an overlapping surface of the connector portion 110c. However, an electrical connection can also be made through contact with a distal end surface of the connector portions 110c. In addition, the electrical contacts 210 of the main device 200 can include a connection element 210c formed of non-metallic conductive thermo-formable material, similar to the connector portions 110c of the peripheral device 100, for establishing an electrical connection to the connector portions 110c. The connection element 210c may be provided on or over and/or extend from the metal contact 210.

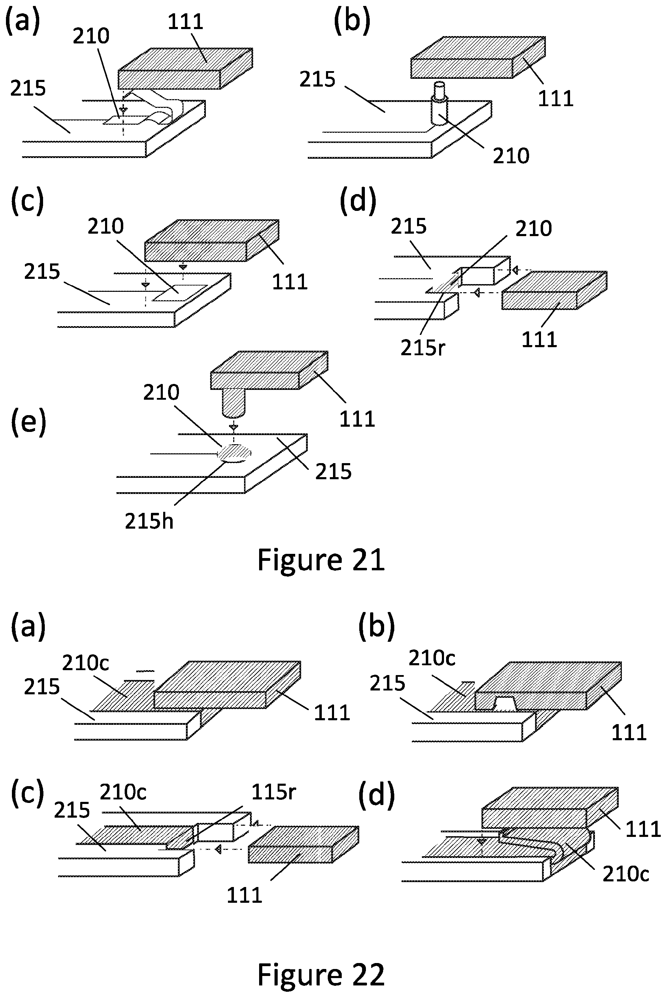

Figures 21(a) to 21(e) show different ways to establish an electrical connection between a metal electrical contact 210 of the main device 200 and a non-metallic connection portion 110c of the peripheral device 100. Each connector portion 110c comprises an exposed contact portion 111 configured to mechanically contact the electrical contact 210 of the main device 200. In figures 21(a) and 21(b) the electrical contact 210 comprises a biasing element in the form of a metallic spring finger and pogo pin, respectively configured to bias against a surface of the contact portion 111 when the devices 100, 200 are connected. Biasing elements may help maintain a stable electrical connection. The spring finger may particularly well suited for use with a sliding rail mechanism, e.g. by orienting the spring finger in the connection direction CD. In figure 21(c) the electrical contact 210 is a simple metallic plate or pad for contacting an overlapping surface of the contact portion 111. In figure 21(d) the electrical contact 210 of the main device 200 is located on a peripheral edge of a circuit board 215 for contacting a distal end surface of the contact portion 111. The electrical contact 210 may be located in a recess 215r in the peripheral edge of the circuit board 215 for receiving the contact portion 111 as shown. Alternatively, in figure 21(e) the electrical contact 210 is located in a recess or through-hole 215h in the circuit board 215 for receiving a projection of the overlapping contact portion 111.

Figures 22(a) to 22(d) show different ways to establish an electrical connection between an electrical contact 210 with a non-metallic connection element 210c and the non-metallic connection portion 110c. In figure 22(a) the connection element 210c is a simple pad for contacting an overlapping surface of the contact portion 111. In figure 22(b) the contact portion 111 comprises a recess for receiving a corresponding projection of the overlapping connection element 210c. In figure 22(c) the connection element 210c is provided on a peripheral edge of a circuit board 210 for contacting an end surface of the contact portion 111. The connection element 210c may be located in a recess 215r in the peripheral edge of the circuit board 215 for receiving the contact portion 111 as shown. In figure 22(d) the connection element 210c comprises a biasing element in the form of a spring finger configured to resiliently deform to bias against an overlapping surface of the contact portion 111 when the devices 100, 200 are connected.

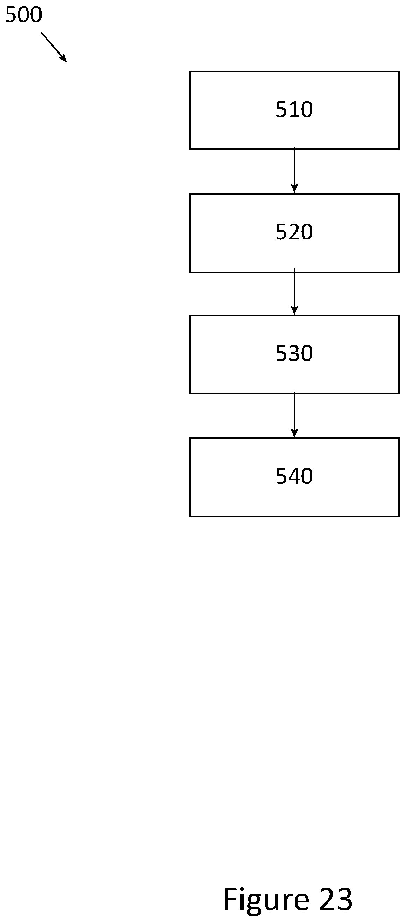

The conductive and non-conductive elements of the peripheral device 100 are formed from thermo-formable materials by one or more moulding processes such as injection moulding, compression moulding and, in some cases, over-moulding. Figure 23 shows a method of manufacturing the peripheral device 100. In step 510, the plurality of sensing electrodes 110 are formed by a moulding process, such as injection moulding and/or compression moulding, depending in the specific material being used. The sensing electrodes can be formed from a substantially rigid or deformable thermo-formable material e.g. depending on the type of electrical contact. In step 520, the rigid housing 140 is formed from by a moulding process, such as injection moulding. In step 530, the soft/deformable cover 130 is formed by a moulding process, such as injection or compression moulding. In step 540, the conductive and non-conductive elements of the peripheral device 100 are assembled. The order of steps 510-530 can be interchanged.

Assembling the peripheral device 100 may comprise positioning one or more sensing electrodes 110 and ground planes 110gp at least partially within a first part 140-1 of the housing 140, and securing a second part 140-2 of the housing 140 to the first part 140-1 to retain the one or more sensing electrodes110 in position. As a final step, a cover 130 may be applied on or over at least part of the rigid housing 140. Assembling the peripheral device 100 may comprise securing one or more sensing electrodes 110 to a part 140-1, 140-2 of the housing 140. The different part of the housing 140-1, 140-2 may be secured together by one or more fasteners such as screws or an adhesive. Assembling the peripheral device 100 may comprise assembling sub-parts of the various sensing elements 101, such as the trigger 101-F and/or joystick 101-J1, 101-J2 (e.g. handle portion 162, base portion 164, biasing element 166 of the actuator 160) before assembling with the housing 140.

The sensing electrodes 110, housing 140 and cover 130 can be moulded as separate elements which are then assembled together, or at least some of the elements can be moulded together. For example, the ground plane sensing electrode(s) 110gp and optionally one or more other sensing electrodes 110 can be moulded over or onto the interior of the rigid housing 140 in an over-moulding process, or vice versa. In addition, the soft cover 130 can be over-moulded onto the rigid housing 140. Further, non-conductive spacers layers 132 can be over-moulded onto a sensing electrode 110 or the ground plane 110gp. In embodiments where the cover 130 is a fabric and provided over a soft deformable sensing electrode 110, such as in devices 100B and 100C, the fabric cover 130 may be heat-pressed onto the sensing electrodes 110.

## Claims

1. A peripheral input device module (100) connectable to a main control device (200) to form a coherent modular control device and provide one or more electrical signals to the main control device in response to a user interaction with the peripheral input device module, the input device comprising:
one or more sensing electrodes (110) formed of a thermo-formable non-metallic conductive material, the or each sensing electrode configured to provide one or more electrical signals in response to a change in capacitance between:
(i) a sensing portion (110s) of the respective sensing electrode and a conductive object (400) being near to or in contact with the respective sensing portion, and/or
(ii) a sensing portion (110s) of the respective sensing electrode and a sensing portion of another of the one or more sensing electrodes or another sensing portion of the respective sensing electrode;
wherein at least one of the one or more sensing electrodes comprises one or more connector portions (110c) that form an electrical connector, wherein each connector portion is configured to electrically connect to a respective electrical contact (210) of a capacitive sensing circuit (230) of the main control device for measuring the electrical signals, and wherein each connector portion of the one or more sensing electrodes comprises an exposed contact portion (111) configured to mechanically contact the respective electrical contact of the capacitive sensing circuit of the main control device to form the electrical connection between them.

2. The peripheral input device module of claim **1,** wherein the peripheral input device module is formed entirely from thermo-formable materials; and/or
wherein the peripheral input device module does not include any metal and/or electronic components.

3. The peripheral input device module of claim 2, comprising a housing (140) configured to support and retain the one or more sensing electrodes, wherein the housing comprises an integral connector body portion (142) configured to hold the connector portions in place, and wherein the housing is formed of or comprises, at least in part, a substantially rigid thermo-formable material; and optionally or preferably
wherein the connector portions of the one or more sensing electrodes are arranged in an array, and the connector body portion of the housing comprises one or more integral spacer elements (142s) that extend between adjacent connector portions to maintain a separation between them.

4. The peripheral input device module of claim 3, wherein the connector body portion of the housing further forms or comprises a locking mechanism configured to engage a locking mechanism of the main control device to releasably attach the peripheral input device module to the main control device, optionally or preferably, by mechanical engagement and/or magnetic attraction; and, optionally or preferably, wherein the locking mechanism is or comprises a slide rail mechanism, and optionally or preferably wherein the electrical connector and the connector body portion extend for a length along a side of peripheral input device module in a slide direction, and the connector body portion comprises one or more male or female rail members that extend at least part of the length of the connector body portion in the slide direction and are configured to slidingly engage one or more complementary rail members of the main control device; and/or
comprising a cover (130) provided on or over at least a portion of the housing, and wherein the cover is formed or comprises a substantially soft, flexible, deformable and/or pliable thermo-formable material.

5. The peripheral input device module of any preceding claim, wherein at least one of the one or more sensing electrodes is configured as a ground electrode (110g) comprising two or more connector portions, wherein at least one of the two or more connector portions is configured to connect to a ground contact of the sensing circuit of the main control device and at least one other of the two or more connector portions is configured to connect to a respective sense contact of the sensing circuit of the main control device, and wherein, when connected to the main control device, the ground electrode is configured to short the respective sense contact(s) to ground and provide a predefined electrical signal pattern or sequence at the electrical contacts of the sensing circuit of the main control device for identifying the peripheral input device module from other peripheral input device modules; and, optionally or preferably,
wherein the connector portions of the one or more sensing electrodes are arranged in an array, and at least one other of the two or more connector portions of the ground electrode is arranged in a predefined position in the array to provide the predefined electrical signal pattern or sequence.

6. The peripheral input device module of any preceding claim, wherein the exposed contact portion is configured to abut, inter-engage with and/or bias against a corresponding electrical contact of the sensing circuit of the main control device, optionally or preferably, wherein the contact portion comprises one or more of: a projection, a recess, and a resiliently deformable biasing element.

7. The peripheral input device module of any preceding claim, wherein a sensing portion of at least one of the one or more sensing electrodes is separated from another sensing portion of the same or a different sensing electrode by a distance and is configured to move relative to the another sensing portion in response to an applied force or pressure, and wherein relative movement between said sensing portions causes the change in capacitance between them; and optionally or preferably
wherein a substantially deformable, flexible, and/or pliable thermo-formable non-conductive material is provided between the respective sensing portions; or the wherein respective sensing portions are separated by a gap; and, optionally or preferably,
wherein one of the respective sensing portions comprises a collapsible element configured to collapse and resiliently deform in response to an applied threshold force or pressure, and wherein a first applied force or pressure below the threshold changes a separation between the respective sensing portions and provides a first change in the capacitance, and a second applied force or pressure at or above the threshold collapses the collapsible element and provides a second change in the capacitance and/or tactile feedback to the user; and, optionally or preferably, wherein proximity of a conductive object to at least one of the respective sensing electrodes causes a third change in capacitance; and, optionally or preferably
wherein the collapsible element is substantially dome-shaped; and/or
wherein the respective sensing electrode with the collapsible element is configured to provide a ground plane when connected to the main control device.

8. The peripheral input device module of any of claims 3 to 7, wherein the housing comprises one or more openings (140o-1, 2), and wherein:
(i) a sensing portion of at least one of the one or more sensing electrodes extends at least partially into or through at least one of the one or more openings for receiving a user interaction; and/or
(ii) the peripheral input device module comprises a movable actuator that extends through one of the one or more openings to a sensing portion of at least one of the one or more sensing electrodes, the actuator configured to receive a user interaction and to transmit the user interaction to the respective sensing portion, and wherein the actuator is formed of or comprises one or more thermo-formable materials.

9. The peripheral input device module of claim 8 part (ii), wherein the movable actuator is or comprises a joystick (101-J1) with a handle portion that extends through the one of the one or more openings and a base portion located within the housing,
wherein the base portion comprises a first sensing electrode and is configured to pivot about a fulcrum to move a sensing portion of the first sensing electrode relative to a set of second sensing portions distributed about the fulcrum, each second sensing portion being associated with a respective second sensing electrode with a connector portion;
wherein pivoting of the base portion causes a change in capacitance between the first sensing portion and the set of second sensing portions and provide one or more electrical signals for detecting a tilt direction and angle of the joystick with respect to the housing.

10. The peripheral input device module of claim 9, wherein the first sensing electrode is configured to electrically contact a fourth sensing electrode having a connector portion to connect to an electrical contact of the sensing circuit of the main control device; and wherein: the fulcrum is integral with the fourth sensing electrode, and the first sensing electrode is configured to electrically contact the fulcrum; or the fulcrum is formed of a non-conductive thermo-formable material, and is optionally integral with the housing; and optionally or preferably wherein the connector portion of the fourth sensing electrode is configured to connect to a ground contact of the sensing circuit of the main control device; and/or
wherein the joystick is moveable between a lower position in which the base portion is pivotable about the fulcrum for detecting a tilt direction and angle of the joystick, and an upper position in which the base portion is translatable in one or more lateral directions with respect to the fulcrum to move the sensing portion of the first sensing electrode relative to a set of third sensing portions distributed about the handle portion, each third sensing portion being associated with a respective third sensing electrode with a connector portion; wherein translation of the base portion causes change in capacitance between the first sensing portion and the set of third sensing portions and provides one or more electrical signals for detecting a translation of the joystick in one or more lateral directions with respect to the housing.

11. The peripheral input device module of claim 9 or claim 10, wherein the joystick further comprises a resiliently deformable biasing element configured to bias the joystick to a rest position and deform to permit movement of the joystick away from the rest position, and wherein, when dependent from claim 16, the rest position includes the lower position; and, optionally or preferably,
wherein the resiliently deformable biasing element is formed of a non-metallic conductive thermo-formable material and optionally is integral with or coupled to the first sensing electrode; or wherein the resiliently deformable biasing element is formed of a non-conductive thermo-formable material; and optionally or preferably
wherein the resiliently deformable element comprises a spiral spring or a disk-like member.

12. A modular control system (1000), comprising:
a main control device (200); and
one or more peripheral input device modules (100), as defined in any of claims 1 to 12, configured to interchangeably connect to the main control device to form a coherent modular control device and provide one or more electrical signals to the main control device in response to a user interaction with a connected peripheral input device module,
wherein the main control device module comprises:
a capacitive sensing circuit (230) configured to measure the one or more electrical signals provided by a connected peripheral input device module; and
an electrical connector (220) comprising a plurality of electrical contacts (210)of the capacitive sensing circuit, each electrical contact configured to electrically contact a respective connector portion (110c) of the connected peripheral input device module, wherein the electrical contacts of the capacitive sensing circuit are configured to mechanically contact the exposed contact portion (111) of a respective connector portion to establish an electrical connection therebetween.

13. The modular control system of claim 12, wherein each electrical contact of the capacitive sensing circuit is configured to abut, inter-engage with and/or bias against the exposed contact portion of the respective connector portion, and optionally or preferably, wherein each electrical contact of the capacitive sensing circuit and/or the contact portion of the respective connector portion comprises one or more of: a projection, a recess, and a biasing element; and/or
wherein each electrical contact of the capacitive sensing circuit comprises a metallic contact pad and/or a metallic mechanical biasing element such as a spring finger or pogo pin; or wherein each electrical contact of the capacitive sensing circuit comprises a metallic contact and a connection element formed of a non-metallic conductive thermo-formable material provided over and/or extending from the metallic contact for contacting the connector portion, and optionally wherein the connection element comprises a contact pad and/or a mechanical biasing element; and/or
wherein the main device comprises a locking mechanism configured to engage a locking mechanism of the one or more peripheral input modules to releasably attach a peripheral input device module to the main control device, optionally or preferably, wherein the locking mechanisms of the main control device and the one or more peripheral input device modules are or comprise a sliding rail mechanism; and/or
wherein the main control device is configured to: determine one or more user interactions with the connected peripheral input device module based on measurement data from capacitive sensing circuit; and optionally or preferably: determine a unique identifier of the connected peripheral input device module based on detection of a predefined electrical signal pattern or sequence at the electrical contacts upon connection of the peripheral input device module to the main controller device; and/or communicate with an external computing device for controlling one or more operations of the computing device based on the determined one or more user interactions; and/or
wherein the modular control system comprises an external computing device (300) in communication with the main control device, and the external computing device is configured to: execute one or more operations based on the one or more user interactions with the connected peripheral input device module determined by the main control device; and/or determine one or more user interactions with the connected peripheral input device module based on measurement data received from the main control device; and optionally or preferably determine a unique identifier of the connected peripheral input device module based on detection of a predefined electrical signal pattern or sequence at the electrical contacts upon connection of the peripheral input device module to the main controller device; and/or
wherein the main control device is or forms at least part of: a game console, a control system for a vehicle interior, or a computer peripheral.

14. A method of manufacturing the peripheral input device module (100) as defined in any of claims 1 to 11, the method comprising:
forming the one or more sensing electrodes (110s) from a thermo-formable non-metallic conductive material;
forming a housing (140) with an integral connector body (142) from a thermo-formable material;
forming a cover (130) from a substantially soft, flexible, deformable and/or pliable thermo-formable non-conductive material; and
assembling the peripheral input device module.

15. The method of claim 14, wherein the one or more sensing electrodes, the housing, and the cover, are formed by a moulding process, and optionally or preferably, wherein the moulding process includes one or more: of injection moulding; compression moulding; and over-moulding.

## Patentansprüche

1. Peripherieeingabevorrichtungsmodul (100), das mit einer Hauptsteuervorrichtung (200) schaltbar ist, um eine einheitliche modulare Steuervorrichtung zu bilden und der Hauptsteuervorrichtung ein oder mehrere elektrische Signale als Reaktion auf eine Benutzerinteraktion mit dem Peripherieeingabevorrichtungsmodul bereitzustellen, wobei die Eingabevorrichtung Folgendes umfasst:
eine oder mehrere Erfassungselektroden (110), die aus einem thermoformbaren, nichtmetallisch leitfähigen Material gebildet sind, wobei die bzw. jede Erfassungselektrode so ausgebildet ist, dass sie ein oder mehrere elektrische Signale als Reaktion auf eine Änderung der Kapazität zwischen:
(i) einem Erfassungsabschnitt (110s) der jeweiligen Erfassungselektrode und einem leitfähigen Objekt (400), das sich in der Nähe des jeweiligen Erfassungsabschnitts befindet oder mit dem jeweiligen Erfassungsabschnitt in Kontakt steht, und/oder
(ii) einem Erfassungsabschnitt (110s) der jeweiligen Erfassungselektrode und einem Erfassungsabschnitt einer anderen der einen oder mehreren Erfassungselektroden oder einem weiteren Erfassungsabschnitt der jeweiligen Erfassungselektrode;
wobei mindestens eine der einen oder mehreren Erfassungselektroden einen oder mehrere Anschlussabschnitte (110c) umfasst, die einen elektrischen Verbinder bilden, wobei jeder Anschlussabschnitt so ausgebildet ist, um elektrisch mit einem jeweiligen elektrischen Kontakt (210) eines kapazitiven Erfassungsschaltkreises (230) der Hauptsteuervorrichtung zum Messen der elektrischen Signale geschaltet zu werden, und wobei jeder Anschlussabschnitt der einen oder mehreren Erfassungselektroden einen freiliegenden Kontaktabschnitt (111) umfasst, der so ausgebildet ist, dass er den jeweiligen elektrischen Kontakt des kapazitiven Erfassungsschaltkreises der Hauptsteuervorrichtung mechanisch kontaktiert, um die elektrische Verbindung zwischen ihnen zu bilden.

2. Peripherieeingabevorrichtungsmodul nach Anspruch 1, wobei das Peripherieeingabevorrichtungsmodul vollständig aus thermoformbaren Materialien gebildet ist; und/oder
wobei das Peripherieeingabevorrichtungsmodul keinerlei Metall und/oder elektronische Komponenten einschließt.

3. Peripherieeingabevorrichtungsmodul nach Anspruch 2, umfassend ein Gehäuse (140), das so ausgebildet ist, dass es die eine oder mehreren Erfassungselektroden trägt und hält, wobei das Gehäuse einen einstückig mit dem Gehäuse ausgebildeten Verbinderkörperabschnitt (142) umfasst, der so ausgebildet ist, dass er die Anschlussabschnitte in Position hält, und wobei das Gehäuse aus einem im Wesentlichen starren, thermoformbaren Material gebildet ist oder dieses mindestens teilweise umfasst; und wahlweise oder vorzugsweise
wobei die Anschlussabschnitte der einen oder mehreren Erfassungselektroden in einem Array angeordnet sind und der Verbinderkörperabschnitt des Gehäuses ein oder mehrere einstückige Abstandshalter (142s) umfasst, die sich zwischen benachbarten Anschlussabschnitten erstrecken, um einen Abstand zwischen ihnen aufrechtzuerhalten.

4. Peripherieeingabevorrichtungsmodul nach Anspruch 3, wobei der Verbinderkörperabschnitt des Gehäuses weiter einen Verriegelungsmechanismus bildet oder umfasst, der so ausgebildet ist, dass er mit einem Verriegelungsmechanismus der Hauptsteuervorrichtung in Eingriff gelangt, um das Peripherieeingabevorrichtungsmodul lösbar an der Hauptsteuervorrichtung zu befestigen, wahlweise oder vorzugsweise, durch mechanischen Eingriff und/oder magnetische Anziehung; und, wahlweise oder vorzugsweise, wobei der Verriegelungsmechanismus ein Gleitschienenmechanismus ist oder umfasst, und wahlweise oder vorzugsweise, wobei sich der elektrische Verbinder und der Verbinderkörperabschnitt entlang einer Seite des Peripherieeingabevorrichtungsmoduls in einer Schieberichtung über eine Länge erstrecken, und der Verbinderkörperabschnitt ein oder mehrere männliche oder weibliche Schienenelemente umfasst, die sich mindestens über einen Teil der Länge des Verbinderkörperabschnitts in der Schieberichtung erstrecken und so ausgebildet sind, dass sie gleitend mit einem oder mehreren komplementären Schienenelementen der Hauptsteuervorrichtung in Eingriff gelangen; und/oder
umfassend eine Abdeckung (130), die auf oder über mindestens einem Abschnitt des Gehäuses bereitgestellt ist, und wobei die Abdeckung aus einem im Wesentlichen weichen, flexiblen, verformbaren und/oder biegsamen thermoformbaren Material gebildet ist oder dieses umfasst.

5. Peripherieeingabevorrichtungsmodul nach einem vorstehenden Anspruch, wobei mindestens eine der einen oder mehreren Erfassungselektroden als Masseelektrode (110g) ausgebildet ist, die zwei oder mehr Anschlussabschnitte umfasst, wobei mindestens einer der zwei oder mehr Anschlussabschnitte so ausgebildet ist, dass er mit einem Massekontakt des Erfassungsschaltkreises der Hauptsteuervorrichtung geschaltet wird
und mindestens ein weiterer der zwei oder mehr Anschlussabschnitte so ausgebildet ist, dass er mit einem jeweiligen Messkontakt des Erfassungsschaltkreises der Hauptsteuervorrichtung geschaltet wird, und wobei, wenn mit der Hauptsteuervorrichtung geschaltet, die Masseelektrode so ausgebildet ist, dass sie den jeweiligen Messkontakt bzw. die jeweiligen Messkontakte gegen Masse kurzschließt und ein vordefiniertes elektrisches Signalmuster oder eine vordefinierte Signalsequenz an den elektrischen Kontakten des Erfassungsschaltkreises der Hauptsteuervorrichtung bereitstellt, um das Peripherieeingabevorrichtungsmodul von anderen Peripherieeingabevorrichtungsmodulen zu identifizieren; und, wahlweise oder vorzugsweise,
wobei die Anschlussabschnitte der einen oder mehreren Erfassungselektroden in einem Array angeordnet sind, und mindestens ein weiterer der zwei oder mehr Anschlussabschnitte der Masseelektrode in einer vordefinierten Position im Array angeordnet ist, um das vordefinierte elektrische Signalmuster oder die vordefinierte Signalsequenz bereitzustellen.

6. Peripherieeingabevorrichtungsmodul nach einem vorstehenden Anspruch, wobei der freiliegende Kontaktabschnitt so ausgebildet ist, dass er an einem entsprechenden elektrischen Kontakt des Erfassungsschaltkreises der Hauptsteuervorrichtung anschlägt, mit diesem ineinandergreift und/oder gegen diesen vorgespannt anliegt, wahlweise oder vorzugsweise, wobei der Kontaktabschnitt eines oder mehrere der folgenden umfasst: einen Vorsprung, eine Aussparung, und ein elastisch verformbares Vorspannelement.

7. Peripherieeingabevorrichtungsmodul nach einem vorstehenden Anspruch, wobei ein Erfassungsabschnitt von mindestens einer der einen oder mehreren Erfassungselektroden von einem anderen Erfassungsabschnitt derselben oder einer anderen Erfassungselektrode durch einen Abstand getrennt ist und so ausgebildet ist, dass er sich relativ zu dem anderen Erfassungsabschnitt als Reaktion auf eine aufgebrachte Kraft oder einen aufgebrachten Druck bewegt, und wobei eine relative Bewegung zwischen den genannten Erfassungsabschnitten die Änderung der Kapazität zwischen ihnen veranlasst; und wahlweise oder vorzugsweise
wobei ein im Wesentlichen verformbares, flexibles und/oder biegsames, thermoformbares, nichtleitendes Material zwischen den jeweiligen Erfassungsabschnitten bereitgestellt ist; oder wobei die jeweiligen Erfassungsabschnitte durch einen Spalt getrennt sind; und, wahlweise oder vorzugsweise,
wobei einer der jeweiligen Erfassungsabschnitte ein zusammendrückbares Element umfasst, das so ausgebildet ist, dass es in Reaktion auf eine aufgebrachte Schwellkraft oder einen aufgebrachten Schwellen-Druck einknickt und elastisch verformt, und wobei eine erste aufgebrachte Kraft oder ein erster aufgebrachter Druck unterhalb der Schwelle einen Abstand zwischen den jeweiligen Erfassungsabschnitten ändert und eine erste Änderung der Kapazität bereitstellt, und eine zweite aufgebrachte Kraft oder ein zweiter aufgebrachter Druck an oder oberhalb der Schwelle das zusammendrückbare Element zusammenfallen lässt und eine zweite Änderung der Kapazität und/oder haptisches Feedback für den Benutzer bereitstellt; und, wahlweise oder vorzugsweise, wobei die Nähe eines leitfähigen Objekts zu mindestens einer der jeweiligen Erfassungselektroden eine dritte Änderung der Kapazität veranlasst; und, wahlweise oder vorzugsweise
wobei das zusammendrückbare Element im Wesentlichen kuppelförmig ist; und/oder wobei die jeweilige Erfassungselektrode mit dem zusammendrückbaren Element so ausgebildet ist, dass sie beim Geschaltetsein mit der Hauptsteuervorrichtung eine Massefläche bereitstellt.

8. Peripherieeingabevorrichtungsmodul nach einem der Ansprüche 3 bis 7, wobei das Gehäuse eine oder mehrere Öffnungen (140o-1, 2) umfasst, und wobei:
(i) ein Erfassungsabschnitt von mindestens einer der einen oder mehreren Erfassungselektroden sich mindestens teilweise in eine oder durch mindestens eine der einen oder mehreren Öffnungen erstreckt, um eine Benutzerinteraktion zu empfangen;
und/oder
(ii) das Peripherieeingabevorrichtungsmodul einen beweglichen Betätiger umfasst, der sich durch eine der einen oder mehreren Öffnungen zu einem Erfassungsabschnitt von mindestens einer der einen oder mehreren Erfassungselektroden erstreckt, wobei der Betätiger so ausgebildet ist, dass er eine Benutzerinteraktion empfängt und die Benutzerinteraktion an den jeweiligen Erfassungsabschnitt überträgt, und wobei der Betätiger aus einem oder mehreren thermoformbaren Materialien gebildet ist oder diese umfasst.

9. Peripherieeingabevorrichtungsmodul nach Anspruch 8 Teil (ii), wobei der bewegliche Betätiger ein Joystick (101-J1) mit einem Griffabschnitt, der sich durch die eine der einen oder mehreren Öffnungen erstreckt, und einem Basisabschnitt, der sich innerhalb des Gehäuses befindet, ist oder umfasst,
wobei der Basisabschnitt eine erste Erfassungselektrode umfasst und so ausgebildet ist, dass er um einen Drehpunkt verschwenkt, um einen Erfassungsabschnitt der ersten Erfassungselektrode relativ zu einer Menge von zweiten Erfassungsabschnitten zu bewegen, die um den Drehpunkt verteilt sind, wobei jeder zweite Erfassungsabschnitt einer jeweiligen zweiten Erfassungselektrode mit einem Anschlussabschnitt zugeordnet ist;
wobei ein Verschwenken des Basisabschnitts eine Änderung der Kapazität zwischen dem ersten Erfassungsabschnitt und der Menge der zweiten Erfassungsabschnitte veranlasst und ein oder mehrere elektrische Signale bereitstellt zum Detektieren einer Neigungsrichtung und eines Neigungswinkels des Joysticks in Bezug auf das Gehäuse.

10. Peripherieeingabevorrichtungsmodul nach Anspruch 9, wobei die erste Erfassungselektrode so ausgebildet ist, dass sie eine vierte Erfassungselektrode elektrisch kontaktiert, die einen Anschlussabschnitt aufweist, um mit einem elektrischen Kontakt des Erfassungsschaltkreises der Hauptsteuervorrichtung geschaltet zu werden; und wobei: der Drehpunkt einstückig mit der vierten Erfassungselektrode ist, und die erste Erfassungselektrode so ausgebildet ist, dass sie den Drehpunkt elektrisch kontaktiert; oder der Drehpunkt aus einem nichtleitenden, thermoformbaren Material gebildet ist und wahlweise einstückig mit dem Gehäuse ist; und wahlweise oder vorzugsweise, wobei der Anschlussabschnitt der vierten Erfassungselektrode so ausgebildet ist, dass er mit einem Massekontakt des Erfassungsschaltkreises der Hauptsteuervorrichtung geschaltet wird; und/oder
wobei der Joystick zwischen einer unteren Position, in der der Basisabschnitt um den Drehpunkt verschwenkbar ist zum Detektieren einer Neigungsrichtung und eines Neigungswinkels des Joysticks, und einer oberen Position beweglich ist, in der der Basisabschnitt in einer oder mehreren lateralen Richtungen in Bezug auf den Drehpunkt translatorisch bewegbar ist, um den Erfassungsabschnitt der ersten Erfassungselektrode relativ zu einer Menge von dritten Erfassungsabschnitten zu bewegen, die um den Griffabschnitt verteilt sind, wobei jeder dritte Erfassungsabschnitt einer jeweiligen dritten Erfassungselektrode mit einem Anschlussabschnitt zugeordnet ist; wobei eine Translation des Basisabschnitts eine Änderung der Kapazität zwischen dem ersten Erfassungsabschnitt und der Menge der dritten Erfassungsabschnitte veranlasst und ein oder mehrere elektrische Signale bereitstellt zum Detektieren einer Translation des Joysticks in einer oder mehreren lateralen Richtungen in Bezug auf das Gehäuse.

11. Peripherieeingabevorrichtungsmodul nach Anspruch 9 oder Anspruch 10, wobei der Joystick weiter ein elastisch verformbares Vorspannelement umfasst, das so ausgebildet ist, dass es den Joystick in eine Ruhestellung vorspannt und sich verformt, um eine Bewegung des Joysticks weg von der Ruhestellung zu erlauben, und wobei, wenn abhängig von Anspruch 16, die Ruhestellung die untere Position einschließt; und, wahlweise oder vorzugsweise,
wobei das elastisch verformbare Vorspannelement aus einem nichtmetallisch leitfähigen, thermoformbaren Material gebildet ist und wahlweise einstückig mit der ersten Erfassungselektrode ist oder mit dieser gekoppelt ist; oder wobei das elastisch verformbare Vorspannelement aus einem nichtleitenden, thermoformbaren Material gebildet ist; und wahlweise oder vorzugsweise
wobei das elastisch verformbare Element eine Spiralfeder oder ein scheibenförmiges Element umfasst.

12. Modulares Steuersystem (1000), umfassend:
eine Hauptsteuervorrichtung (200); und
eine oder mehrere Peripherieeingabevorrichtungsmodule (100), wie in einem der Ansprüche 1 bis 12 definiert, so ausgebildet, dass es austauschbar mit der Hauptsteuervorrichtung schaltbar ist, um eine einheitliche modulare Steuervorrichtung zu bilden und der Hauptsteuervorrichtung ein oder mehrere elektrische Signale als Reaktion auf eine Benutzerinteraktion mit einem geschalteten Peripherieeingabevorrichtungsmodul bereitzustellen,
wobei das Hauptsteuervorrichtungsmodul Folgendes umfasst:
einen kapazitiven Erfassungsschaltkreis (230), der so ausgebildet ist, dass er die von einem geschalteten Peripherieeingabevorrichtungsmodul bereitgestellten ein oder mehrere elektrischen Signale misst; und
einen elektrischen Verbinder (220), der eine Vielzahl von elektrischen Kontakten (210) des kapazitiven Erfassungsschaltkreises umfasst, wobei jeder elektrische Kontakt so ausgebildet ist, dass er einen jeweiligen Anschlussabschnitt (110c) des geschalteten Peripherieeingabevorrichtungsmoduls elektrisch kontaktiert,
wobei die elektrischen Kontakte des kapazitiven Erfassungsschaltkreises so ausgebildet sind, dass sie den freiliegenden Kontaktabschnitt (111) eines jeweiligen Anschlussabschnitts mechanisch kontaktieren, um eine elektrische Verbindung zwischen diesen herzustellen.

13. Modulares Steuersystem nach Anspruch 12, wobei jeder elektrische Kontakt des kapazitiven Erfassungsschaltkreises so ausgebildet ist, dass er an dem freiliegenden Kontaktabschnitt des jeweiligen Anschlussabschnitts anschlägt, mit diesem ineinandergreift und/oder gegen diesen vorgespannt anliegt, und wahlweise oder vorzugsweise, wobei jeder elektrische Kontakt des kapazitiven Erfassungsschaltkreises und/oder der Kontaktabschnitt des jeweiligen Anschlussabschnitts eines oder mehrere der folgenden umfasst: einen Vorsprung, eine Aussparung und ein Vorspannelement; und/oder
wobei jeder elektrische Kontakt des kapazitiven Erfassungsschaltkreises ein metallisches Kontaktpad und/oder ein metallisches mechanisches Vorspannelement wie einen Federfinger oder einen Federkontaktstift umfasst;
oder wobei jeder elektrische Kontakt des kapazitiven Erfassungsschaltkreises einen metallischen Kontakt und ein Verbindungselement umfasst, das aus einem nichtmetallisch leitfähigen, thermoformbaren Material gebildet ist und über dem metallischen Kontakt bereitgestellt ist und/oder sich von diesem erstreckt, um den Anschlussabschnitt zu kontaktieren, und wahlweise wobei das Verbindungselement ein Kontaktpad und/oder ein mechanisches Vorspannelement umfasst; und/oder
wobei die Hauptsteuervorrichtung einen Verriegelungsmechanismus umfasst, der so ausgebildet ist, dass er mit einem Verriegelungsmechanismus der einen oder mehreren Peripherieeingabemodule in Eingriff gelangt, um ein Peripherieeingabevorrichtungsmodul lösbar an der Hauptsteuervorrichtung zu befestigen, wahlweise oder vorzugsweise, wobei die Verriegelungsmechanismen der Hauptsteuervorrichtung und der einen oder mehreren Peripherieeingabevorrichtungsmodule ein Gleitschienenmechanismus sind oder einen solchen umfassen; und/oder
wobei die Hauptsteuervorrichtung so ausgebildet ist, dass sie: eine oder mehrere Benutzerinteraktionen mit dem geschalteten Peripherieeingabevorrichtungsmodul basierend auf Messdaten des kapazitiven Erfassungsschaltkreises zu bestimmen; und wahlweise oder vorzugsweise:
einen eindeutigen Identifikator des geschalteten Peripherieeingabevorrichtungsmoduls zu bestimmen, basierend auf einer Detektion eines vordefinierten elektrischen Signalmusters oder einer vordefinierten Signalsequenz an den elektrischen Kontakten beim Schalten des Peripherieeingabevorrichtungsmoduls an die Hauptsteuervorrichtung;
und/oder mit einer externen Recheneinrichtung zu kommunizieren zum Regeln eines oder mehrerer Vorgänge der Recheneinrichtung basierend auf den bestimmten einen oder mehreren Benutzerinteraktionen; und/oder
wobei das modulare Steuersystem eine externe Recheneinrichtung (300) umfasst, die mit der Hauptsteuervorrichtung in Kommunikation steht, und die externe Recheneinrichtung so ausgebildet ist, dass sie: einen oder mehrere Vorgänge basierend auf den von der Hauptsteuervorrichtung bestimmten einen oder mehreren Benutzerinteraktionen mit dem geschalteten Peripherieeingabevorrichtungsmodul auszuführen;
und/oder eine oder mehrere Benutzerinteraktionen mit dem geschalteten Peripherieeingabevorrichtungsmodul basierend auf von der Hauptsteuervorrichtung empfangenen Messdaten zu bestimmen;
und wahlweise oder vorzugsweise einen eindeutigen Identifikator des geschalteten Peripherieeingabevorrichtungsmoduls zu bestimmen, basierend auf einer Detektion eines vordefinierten elektrischen Signalmusters oder einer vordefinierten Signalsequenz an den elektrischen Kontakten beim Schalten des Peripherieeingabevorrichtungsmoduls an die Hauptsteuervorrichtung; und/oder
wobei die Hauptsteuervorrichtung ist oder mindestens einen Teil von Folgendem bildet: eine Spielkonsole, ein Regelsystem für einen Fahrzeuginnenraum, oder ein Computer-Peripheriegerät.

14. Verfahren zum Herstellen des Peripherieeingabevorrichtungsmoduls (100) wie in einem der Ansprüche 1 bis 11 definiert, wobei das Verfahren umfasst:
Bilden der einen oder mehreren Erfassungselektroden (110s) aus einem thermoformbaren, nichtmetallisch leitfähigen Material;
Bilden eines Gehäuses (140) mit einem einstückigen Verbinderkörper (142) aus einem thermoformbaren Material;
Bilden einer Abdeckung (130) aus einem im Wesentlichen weichen, flexiblen, verformbaren und/oder biegsamen, thermoformbaren, nichtleitenden Material; und
Montieren des Peripherieeingabevorrichtungsmoduls.

15. Verfahren nach Anspruch 14, wobei die eine oder mehreren Erfassungselektroden, das Gehäuse und die Abdeckung durch ein Formgebungsverfahren gebildet sind, und wahlweise oder vorzugsweise, wobei das Formgebungsverfahren eines oder mehrere der folgenden einschließt: Spritzgießen; Formpressen; und Überformen.

## Revendications

1. Module de dispositif d'entrée périphérique (100) pouvant être connecté à un dispositif de commande principal (200) pour former un dispositif de commande modulaire cohérent et fournir un ou plusieurs signaux électriques au dispositif de commande principal en réponse à une interaction d'utilisateur avec le module de dispositif d'entrée périphérique, le dispositif d'entrée comprenant :
une ou plusieurs électrodes de détection (110) formées d'un matériau conducteur non métallique thermoformable, la ou chaque électrode de détection étant configurée pour fournir un ou plusieurs signaux électriques en réponse à un changement de capacité entre :
(i) une partie de détection (110s) de l'électrode de détection respective et un objet conducteur (400) proche de ou en contact avec la partie de détection respective, et/ou
(ii) une partie de détection (110s) de l'électrode de détection respective et une partie de détection d'une autre de la une ou des plusieurs électrodes de détection ou d'une autre partie de détection de l'électrode de détection respective ;
dans lequel au moins une de la une ou des plusieurs électrodes de détection comprend une ou plusieurs parties de connecteur (110c) qui forment un connecteur électrique, dans lequel chaque partie de connecteur est configurée pour se connecter électriquement à un contact électrique (210) respectif d'un circuit de détection capacitif (230) du dispositif de commande principal pour mesurer les signaux électriques, et dans lequel chaque partie de connecteur de la une ou des plusieurs électrodes de détection comprend une partie de contact exposée (111) configurée pour entrer en contact mécanique avec le contact électrique respectif du circuit de détection capacitif du dispositif de commande principal de manière à former la connexion électrique entre eux.

2. Module de dispositif d'entrée périphérique selon la revendication 1, dans lequel le module de dispositif d'entrée périphérique est formé entièrement à partir de matériaux thermoformables ; et/ou
dans lequel le module de dispositif d'entrée périphérique n'inclut aucun composant métallique et/ou électronique.

3. Module de dispositif d'entrée périphérique selon la revendication 2, comprenant un boîtier (140) configuré pour supporter et retenir une ou plusieurs électrodes de détection, dans lequel le boîtier comprend une partie de corps de connecteur intégré (142) configurée pour maintenir les parties de connecteur en place, et dans lequel le boîtier est formé de ou comprend, au moins en partie, un matériau thermoformable sensiblement rigide ; et facultativement ou de préférence
dans lequel les parties de connecteur de la une ou des plusieurs électrodes de détection sont agencées en un réseau, et la partie de corps de connecteur du boîtier comprend un ou plusieurs éléments d'espacement intégrés (142s) qui s'étendent entre des parties de connecteur adjacentes pour maintenir une séparation entre elles.

4. Module de dispositif d'entrée périphérique selon la revendication 3, dans lequel la partie de corps de connecteur du boîtier forme ou comprend en outre un mécanisme de verrouillage configuré pour venir en prise avec un mécanisme de verrouillage du dispositif de commande principal de manière à fixer de manière amovible le module de dispositif d'entrée périphérique au dispositif de commande principal, facultativement ou de préférence, par mise en prise mécanique et/ou attraction magnétique ; et, facultativement ou de préférence, dans lequel le mécanisme de verrouillage est ou comprend un mécanisme de glissière, et facultativement ou de préférence dans lequel le connecteur électrique et la partie de corps de connecteur s'étendent sur une longueur le long d'un côté du module de dispositif d'entrée périphérique dans une direction de coulissement, et la partie de corps de connecteur comprend un ou plusieurs éléments de rail mâle ou femelle qui s'étendent au moins sur une partie de la longueur de la partie de corps de connecteur dans la direction de coulissement et sont configurés pour venir en prise de manière coulissante avec un ou plusieurs éléments de rail complémentaires du dispositif de commande principal ; et/ou
comprenant un couvercle (130) fourni sur ou au-dessus d'au moins une partie du boîtier, et dans lequel le couvercle est formé ou comprend un matériau thermoformable sensiblement souple, flexible, déformable et/ou pliable.

5. Module de dispositif d'entrée périphérique selon une quelconque revendication précédente, dans lequel au moins une de la une ou des plusieurs électrodes de détection est configurée en tant qu'une électrode de masse (110g) comprenant deux parties de connecteur ou plus, dans lequel au moins une des deux parties de connecteur ou plus est configurée pour se connecter à un contact de masse du circuit de détection du dispositif de commande principal et au moins une autre des deux parties de connecteur ou plus est configurée pour se connecter à un contact de détection respectif du circuit de détection du dispositif de commande principal, et dans lequel, lorsqu'elle est connectée au dispositif de commande principal, l'électrode de masse est configurée pour court-circuiter le(s) contact(s) de détection respectif(s) à la masse et fournir un motif ou une séquence de signaux électriques prédéfini(e) au niveau des contacts électriques du circuit de détection du dispositif de commande principal pour identifier le module de dispositif d'entrée périphérique par rapport à d'autres modules de dispositif d'entrée périphérique ; et, facultativement ou de préférence,
dans lequel les parties de connecteur de la une ou des plusieurs électrodes de détection sont agencées en un réseau, et au moins une autre des deux parties de connecteur ou plus de l'électrode de masse est agencée dans une position prédéfinie dans le réseau pour fournir le motif ou la séquence de signaux électriques prédéfini(e).

6. Module de dispositif d'entrée périphérique selon une quelconque revendication précédente, dans lequel la partie de contact exposée est configurée pour venir en butée contre, venir en prise mutuelle avec et/ou solliciter contre un contact électrique correspondant du circuit de détection du dispositif de commande principal, facultativement ou de préférence, dans lequel la partie de contact comprend un ou une ou plusieurs d'une saillie, d'un renfoncement, et d'un élément de sollicitation élastiquement déformable.

7. Module de dispositif d'entrée périphérique selon une quelconque revendication précédente, dans lequel une partie de détection d'au moins une de la une ou des plusieurs électrodes de détection est séparée d'une autre partie de détection de la même électrode de détection ou d'une électrode de détection différente par une distance et est configurée pour se déplacer par rapport à l'autre partie de détection en réponse à une force ou pression appliquée, et dans lequel un mouvement relatif entre lesdites parties de détection provoque le changement de capacité entre elles ; et facultativement ou de préférence
dans lequel un matériau non conducteur thermoformable sensiblement déformable, flexible, et/ou pliable est fourni entre les parties de détection respectives ; ou dans lequel les parties de détection respectives sont séparées par un interstice ; et, facultativement ou de préférence,
dans lequel une des parties de détection respectives comprend un élément repliable configuré pour se replier et se déformer élastiquement en réponse à une force ou pression seuil appliquée, et dans lequel une première force ou pression appliquée inférieure au seuil change une séparation entre les parties de détection respectives et fournit un premier changement de capacité, et une seconde force ou pression appliquée égale ou supérieure au seuil fait se replier l'élément repliable et fournit un deuxième changement de la capacité et/ou une rétroaction tactile à l'utilisateur ; et, facultativement ou de préférence, dans lequel la proximité d'un objet conducteur d'au moins une des électrodes de détection respectives provoque un troisième changement de capacité ; et, facultativement ou de préférence
dans lequel l'élément repliable est sensiblement en forme de dôme ;
et/ou dans lequel l'électrode de détection respective avec l'élément repliable est configurée pour fournir un plan de masse lorsqu'elle est connectée au dispositif de commande principal.

8. Module de dispositif d'entrée périphérique selon l'une quelconque des revendications 3 à 7, dans lequel le boîtier comprend une ou plusieurs ouvertures (140o-1, 2), et dans lequel :
(i) une partie de détection d'au moins une de l'une ou des plusieurs électrodes de détection s'étend au moins partiellement dans ou à travers au moins une de l'une ou des plusieurs ouvertures pour recevoir une interaction d'utilisateur ; et/ou
(ii) le module de dispositif d'entrée périphérique comprend un actionneur mobile qui s'étend à travers une de l'une ou des plusieurs ouvertures jusqu'à une partie de détection d'au moins une de la une ou des plusieurs électrodes de détection, l'actionneur étant configuré pour recevoir une interaction d'utilisateur et pour transmettre l'interaction d'utilisateur à la partie de détection respective, et dans lequel l'actionneur est formé de ou comprend un ou plusieurs matériaux thermoformables.

9. Module de dispositif d'entrée périphérique selon la revendication 8, partie (ii), dans lequel l'actionneur mobile est ou comprend un joystick (101-J1) avec une partie de poignée qui s'étend à travers l'une de l'une ou des plusieurs ouvertures et une partie de base située à l'intérieur du boîtier,
dans lequel la partie de base comprend une première électrode de détection et est configurée pour pivoter autour d'un point d'appui de manière à déplacer une partie de détection de la première électrode de détection par rapport à un ensemble de deuxièmes parties de détection distribuées autour du point d'appui, chaque deuxième partie de détection étant associée à une deuxième électrode de détection respective avec une partie de connecteur ;
dans lequel un pivotement de la partie de base provoque un changement de capacité entre la première partie de détection et l'ensemble de deuxièmes parties de détection et fournit un ou plusieurs signaux électriques pour détecter une direction et un angle d'inclinaison du joystick par rapport au boîtier.

10. Module de dispositif d'entrée périphérique selon la revendication 9, dans lequel la première électrode de détection est configurée pour entrer en contact électrique avec une quatrième électrode de détection présentant une partie de connecteur de manière à se connecter à un contact électrique du circuit de détection du dispositif de commande principal ; et dans lequel : le point d'appui fait partie de la quatrième électrode de détection, et la première électrode de détection est configurée pour entrer en contact électrique avec le point d'appui ; ou le point d'appui est formé d'un matériau thermoformable non conducteur, et fait facultativement partie du boîtier ; et, facultativement ou de préférence, dans lequel la partie de connecteur de la quatrième électrode de détection est configurée pour se connecter à un contact de masse du circuit de détection du dispositif de commande principal ; et/ou
dans lequel la manette est mobile entre une position inférieure dans laquelle la partie de base peut pivoter autour du point d'appui pour détecter une direction et un angle d'inclinaison du joystick, et une position supérieure dans laquelle la partie de base peut se déplacer en translation dans une ou plusieurs directions latérales par rapport au point d'appui pour déplacer la partie de détection de la première électrode de détection par rapport à un ensemble de troisièmes parties de détection distribuées autour de la partie de poignée, chaque troisième partie de détection est associée à une troisième électrode de détection respective avec une partie de connexion ; dans lequel une translation de la partie de base provoque un changement de capacité entre la première partie de détection et l'ensemble de troisièmes parties de détection et fournit un ou plusieurs signaux électriques pour détecter une translation du joystick dans une ou plusieurs directions latérales par rapport au boîtier.

11. Module de dispositif d'entrée périphérique selon la revendication 9 ou la revendication 10, dans lequel le joystick comprend en outre un élément de sollicitation élastiquement déformable configuré pour solliciter le joystick jusqu'à une position de repos et se déformer pour permettre un mouvement d'éloignement du joystick par rapport à la position de repos, et dans lequel, lorsque dépendante de la revendication 16, la position de repos inclut la position inférieure ; et, facultativement ou de préférence,
dans lequel l'élément de sollicitation élastiquement déformable est formé d'un matériau thermoformable conducteur non métallique et, facultativement, fait partie de ou est couplé à la première électrode de détection ; ou dans lequel l'élément de sollicitation élastiquement déformable est formé d'un matériau thermoformable non conducteur ; et facultativement ou de préférence
dans lequel l'élément élastiquement déformable comprend un ressort en spirale ou un élément en forme de disque.

12. Système de commande modulaire (1000), comprenant :
un dispositif de commande principal (200) ; et
un ou plusieurs modules de dispositif d'entrée périphérique (100), tels que définis dans l'une quelconque des revendications 1 à 12, configurés pour se connecter de manière interchangeable au dispositif de commande principal de manière à former un dispositif de commande modulaire cohérent et fournir un ou plusieurs signaux électriques au dispositif de commande principal en réponse à une interaction d'utilisateur avec un module de dispositif d'entrée périphérique connecté,
dans lequel le module de dispositif de commande principal comprend :
un circuit de détection capacitif (230) configuré pour mesurer le un ou les plusieurs signaux électriques fournis par un module de dispositif d'entrée périphérique connecté ; et
un connecteur électrique (220) comprenant une pluralité de contacts électriques (210) du circuit de détection capacitif, chaque contact électrique étant configuré pour entrer en contact électrique avec une partie de connecteur (110c) respective du module de dispositif d'entrée périphérique connecté,
dans lequel les contacts électriques du circuit de détection capacitif sont configurés pour entrer en contact mécanique avec la partie de contact exposée (111) d'une partie de connecteur respective de manière à établir une connexion électrique entre eux.

13. Système de commande modulaire selon la revendication 12, dans lequel chaque contact électrique du circuit de détection capacitif est configuré pour venir en butée contre, venir en prise mutuelle avec et/ou solliciter contre la partie de contact exposée de la partie de connecteur respective, et facultativement ou de préférence, dans lequel chaque contact électrique du circuit de détection capacitif et/ou la partie de contact de la partie de connecteur respective comprend un ou une ou plusieurs d'une saillie, d'un renfoncement, et d'un élément de sollicitation ; et/ou
dans lequel chaque contact électrique du circuit de détection capacitif comprend une plot de contact métallique et/ou un élément de sollicitation mécanique métallique tel qu'un doigt à ressort ou une pointe à ressort ; ou dans lequel chaque contact électrique du circuit de détection capacitif comprend un contact métallique et un élément de connexion formé d'un matériau thermoformable conducteur non métallique fourni au-dessus et/ou s'étendant à partir du contact métallique pour entrer en contact avec la partie de connecteur, et facultativement dans lequel l'élément de connexion comprend un plot de contact et/ou un élément de sollicitation mécanique ; et/ou
dans lequel le dispositif principal comprend un mécanisme de verrouillage configuré pour venir en prise avec un mécanisme de verrouillage du un ou des plusieurs modules d'entrée périphérique de manière à fixer de manière amovible un module de dispositif d'entrée périphérique au dispositif de commande principal, facultativement ou de préférence, dans lequel les mécanismes de verrouillage du dispositif de commande principal et du un ou des plusieurs modules de dispositif d'entrée périphérique sont ou comprennent un mécanisme de glissière ; et/ou
dans lequel le dispositif de commande principal est configuré pour : déterminer une ou plusieurs interactions d'utilisateur avec le module de dispositif d'entrée périphérique connecté sur la base de données de mesure en provenance du circuit de détection capacitif ; et facultativement ou de préférence : déterminer un identifiant unique du module de dispositif d'entrée périphérique connecté sur la base d'une détection d'un motif ou d'une séquence de signaux électriques prédéfini(e) au niveau des contacts électriques lors d'une connexion du module de dispositif d'entrée périphérique au dispositif de commande principal ; et/ou communiquer avec un dispositif informatique externe pour commander une ou plusieurs opérations du dispositif informatique sur la base de la une ou des plusieurs interactions d'utilisateur déterminées ; et/ou
dans lequel le système de commande modulaire comprend un dispositif informatique externe (300) en communication avec le dispositif de commande principal, et le dispositif informatique externe est configuré pour : exécuter une ou plusieurs opérations sur la base de la une ou des plusieurs interactions d'utilisateur avec le module de dispositif d'entrée périphérique connecté déterminées par le dispositif de commande principal ; et/ou déterminer une ou plusieurs interactions d'utilisateur avec le module de dispositif d'entrée périphérique connecté sur la base de données de mesure reçues en provenance du dispositif de commande principal ; et facultativement ou de préférence, déterminer un identifiant unique du module de dispositif d'entrée périphérique connecté sur la base d'une détection d'un motif ou d'une séquence de signaux électriques prédéfini(e) au niveau des contacts électriques lors d'une connexion du module de dispositif d'entrée périphérique au dispositif de commande principal ; et/ou
dans lequel le dispositif de commande principal est ou forme au moins une partie d'une console de jeu, d'un système de commande pour un intérieur de véhicule, ou d'un périphérique d'ordinateur.

14. Procédé de fabrication du module de dispositif d'entrée périphérique (100) tel que défini dans l'une quelconque des revendications 1 à 11, le procédé comprenant :
la formation de la une ou des plusieurs électrodes de détection (110s) à partir d'un matériau conducteur non métallique thermoformable ;
la formation d'un boîtier (140) avec un corps de connecteur intégré (142) à partir d'un matériau thermoformable ;
la formation d'un couvercle (130) à partir d'un matériau non conducteur thermoformable sensiblement souple, flexible, déformable et/ou pliable ; et
l'assemblage du module de dispositif d'entrée périphérique.

15. Procédé selon la revendication 14, dans lequel la une ou les plusieurs électrodes de détection, le boîtier, et le couvercle, sont formés par un processus de moulage, et facultativement ou de préférence, dans lequel le processus de moulage inclut un ou plusieurs d'un moulage par injection, d'un moulage par compression, et d'un surmoulage.
